(19) Europäisches Patentamt
European Patent Office
Office européen des brevets

(11) EP 3 744 745 A1

(12) EUROPÄISCHE PATENTANMELDUNG

(43) Veröffentlichungstag:
**02.12.2020 Patentblatt 2020/49**

(51) Int Cl.:
***C08G 18/00*** *(2006.01)* *C08J 9/00* *(2006.01)*

(21) Anmeldenummer: **20174097.4**

(22) Anmeldetag: **12.05.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **28.05.2019 EP 19176877**

(71) Anmelder: **Evonik Operations GmbH**
**45128 Essen (DE)**

(72) Erfinder:
- **HERMANN, Daniela**
  **40477 Düsseldorf (DE)**
- **HUBEL, Roland**
  **45136 Essen (DE)**
- **TERHEIDEN, Annegret**
  **46519 Alpen (DE)**
- **FERENZ, Michael**
  **45147 Essen (DE)**
- **KNOTT, Wilfried**
  **45355 Essen (DE)**
- **DUDZIK, Horst**
  **45326 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

# (54) HERSTELLUNG VON PU-SCHAUMSTOFFEN

(57) Verfahren zur Herstellung von PU-Schaumstoffen durch Umsetzung mindestens einer Polyolkomponente mit mindestens einer Isocyanatkomponente in Gegenwart von einem oder mehreren Katalysatoren, die die Reaktionen Isocyanat-Polyol und/oder Isocyanat-Wasser und/oder die IsocyanatTrimerisierung katalysieren, sowie optional von ein oder mehreren chemischen oder physikalischen Treibmitteln, unter Einsatz von im Siloxanteil verzweigten SiOC-verknüpften Polyethersiloxanen, hergestellt aus verzweigten, Acetoxy-gruppen tragenden Siloxanen, wobei so viel von dem im Siloxanteil verzweigten SiOC-verknüpften Polyethersiloxan zugegeben wird, dass der Massenanteil dieses Polyethersiloxans (e) bezogen auf den fertigen PU-Schaumstoff von 0,0001 bis 10 Gew.-% beträgt.

EP 3 744 745 A1

## Beschreibung

Die vorliegende Erfindung liegt auf dem Feld der PU-Schaumstoffe. Sie betrifft insbesondere ein Verfahren zur Herstellung von PU-Schaumstoffen unter Einsatz von im Siloxanteil verzweigten SiOC-verknüpften Polyethersiloxanen, hergestellt aus verzweigten, Acetoxygruppen tragenden Siloxanen.

Polyurethan-Schaumstoffe (PU-Schaumstoffe) sind an sich bekannt. Es handelt sich um zelluläre und/oder mikrozelluläre Polyurethanmaterialen. Sie können u.a. in geschlossenzellige oder teilweise geschlossenzellige PU-Hartschaumstoffe und offenzellige oder teilweise offenzellige PU-Weichschaumstoffe unterteilt werden. PU-Hartschaumstoffe werden vorwiegend als Dämmmaterialien z.B. in Kühlschranksystemen oder bei der Wärmeisolation von Gebäuden eingesetzt. PU-Weichschaumstoffe werden in einer Vielzahl von technischen Anwendungen in Industrie und privatem Bereich eingesetzt, z.B. zur Geräuschdämmung, zur Herstellung von Matratzen oder zur Polsterung von Möbeln. Einen besonders wichtigen Markt für verschiedene Typen von PU-Schäumen, wie konventionelle Weichschaumstoffe auf Ether- oder Esterpolyolbasis, Kaltweichschaumstoffe, im Folgenden auch als Kaltschäume (häufig auch als "High Resilience" (HR) Schäume) bezeichnet, und Hartschäume, sowie Schäume deren Eigenschaften zwischen diesen Klassifizierungen liegen, stellt z.B. die Automobilindustrie dar. Es können hier z.B. Hartschäume als Dachhimmel, Esterschäume zur Innenverkleidung der Türen sowie für ausgestanzte Sonnenblenden, Kalt- und Weichschäume für Sitzsysteme verwendet werden. Ein weiterer besonders wichtiger Markt betrifft Matratzen und Sitzsysteme in Wohnungen, Büros und dergleichen. Mit Blick auf Weichschaumstoffe kann auch zwischen Kaltweichschaumstoffen und Heißweichschaumstoffen unterschieden werden, wie z.B. in EP 2042 534 A1 beschrieben, worauf hier im vollen Umfang Bezug genommen wird.

Es besteht nach wie vor der Bedarf, die Herstellung von PU-Schaumstoffen mit Blick auf die Produktqualität zu verbessern, insbesondere mit Blick auf die Herstellung von geruchsarmen PU-Schäumen und/oder mit Blick auf die Herstellung von alterungsbeständigen PU-Schäumen. Konkrete Aufgabe der vorliegenden Erfindung war deshalb die Bereitstellung von PU-Schaumstoffen, die vorzugsweise geruchsarm sind und/oder eine verbesserte Alterungsbeständigkeit haben.

Überraschenderweise wurde gefunden, dass ein Verfahren zur Herstellung von PU-Schaumstoffen unter Einsatz von im Siloxanteil verzweigten SiOC-verknüpften Polyethersiloxanen, hergestellt aus verzweigten, Acetoxygruppen tragenden Siloxanen, diese Aufgabe löst.

Gegenstand der vorliegenden Erfindung ist vor diesem Hintergrund ein Verfahren zur Herstellung von PU-Schaumstoffen durch Umsetzung

(a) mindestens einer Polyolkomponente mit
(b) mindestens einer Isocyanatkomponente
in Gegenwart von
(c) einem oder mehreren Katalysatoren, die die Reaktionen Isocyanat-Polyol und/oder Isocyanat-Wasser und/oder die Isocyanat-Trimerisierung katalysieren, sowie
(d) optional von ein oder mehreren chemischen oder physikalischen Treibmitteln,
unter Einsatz von
(e) im Siloxanteil verzweigten SiOC-verknüpften Polyethersiloxanen, hergestellt aus
(f) verzweigten, Acetoxygruppen tragenden Siloxanen,

wobei so viel von dem im Siloxanteil verzweigten SiOC-verknüpften Polyethersiloxan (e) zugegeben wird, dass der Massenanteil dieses Polyethersiloxans (e) bezogen auf den fertigen PU-Schaumstoff von 0,0001 bis 10 Gew.-%, vorzugsweise 0,01 bis 6 Gew.-%, insbesondere 0,1 bis 5 Gew.-% beträgt.

Die Komponenten (a) bis (d) sind an sich bekannt, sie werden weiter unten genauer beschrieben. Die Komponente (e) und deren Bereitstellung aus verzweigten, Acetoxygruppen tragenden Siloxanen (f) werden weiter unten genauer beschrieben.

Vorteilhafterweise ermöglicht die vorliegende Erfindung die Bereitstellung von geruchsarmen PU-Schaumstoffen, insbesondere von geruchsarmen PU-Weichschaumstoffen, wie in den Beispielen belegt. Geruchsarm bedeutet hier, dass der resultierende PU-Schaumstoff einen geringeren Produktgeruch aufweist, als Resultat der Verwendung der erfindungsgemäß eingesetzten, im Siloxanteil verzweigten SiOC-verknüpften Polyethersiloxane, hergestellt aus verzweigten, Acetoxygruppen tragenden Siloxanen, im Vergleich zu ansonsten vergleichbar hergestellten Schäumen, bei denen allerdings Stabilisatoren nach dem Stand der Technik eingesetzt wurden, was insbesondere durch olfaktorische Überprüfung durch ein Panel von geruchlich geschulten Personen überprüfbar ist.

Vorteilhafterweise ermöglicht die vorliegende Erfindung weiterhin die Bereitstellung von alterungsbeständigen PU-Schaumstoffen, insbesondere von alterungsbeständigeren PU-Weichschaumstoffen, wie in den Beispielen belegt. Alterungsbeständiger bedeutet hier, dass der resultierende PU-Schaumstoff alterungsbeständiger ist, als Resultat der Verwendung der erfindungsgemäß eingesetzten, im Siloxanteil verzweigten SiOC-verknüpften Polyethersiloxanen, hergestellt aus verzweigten, Acetoxygruppen tragenden Siloxanen, im Vergleich zu ansonsten vergleichbar hergestellten Schäumen, bei denen allerdings Stabilisatoren nach dem Stand der Technik eingesetzt wurden. Die Alterungseigenschaften werden im Sinne dieser Erfindung über die Messung des Druckverformungsrestes (Compression Set) überprüft, wie im experimentellen Teil genau dargelegt.

Vorteilhafterweise ermöglicht die vorliegende Erfindung weiterhin die Bereitstellung von PU-Schäumen mit verminderten Aldehyd-Emissionen, wie vorzugsweise an Formaldehyd-, Acetaldehyd- und Propionaldehyd, insbesondere Propionaldehyd.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe, Carbodiimide, Uretdione, Isocyanurate oder Uretimine. Daher werden unter PU-Schäumen im Sinne der vorliegenden Erfindung sowohl PU-Schäume (PUR-Schäume) als auch Polyisocyanurat-Schäume (PIR-Schäume) verstanden. Bevorzugte PU-Schäume sind PU-Weichschaumstoffe, PU-Hartschaumstoffe und PU-Integralschaumstoffe. Hierin besonders bevorzugt sind konventionelle PU-Weichschäume auf Ether- oder Esterpolyolbasis, hochelastische Polyurethankaltschaumstoffe (im folgenden auch als "High Resilience" also HR-PU-Schäume bezeichnet), viskoelastische PU-Schäume, PU-Hypersoft-Schaum, halbharte PU-Schäume und PU-Hartschaumstoffe, sowie PU-Schäume deren Eigenschaften zwischen diesen Klassifizierungen liegen und in der Automobilindustrie eingesetzt werden. Insbesondere alle vorgenannten PU-Schaumtypen sind von der Erfindung erfasst.

Es versteht sich von selbst, dass der Fachmann zur Herstellung der unterschiedlichen PU-Schaumstofftypen, z.B. von Heiß-, Kalt-, Ester-PU-Weichschaumstoffen oder PU-Hartschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere PU-Schaumtyp, zu erhalten.

Bei der erfindungsgemäßen Herstellung von PU-Schaumstoffen werden vorzugsweise zumindest eine Polyolkomponente und zumindest eine Isocyanatkomponente, optional in Gegenwart von Wasser, physikalischen oder chemischen Treibmitteln, Flammschutzmitteln, Katalysatoren und/oder weiteren Zusatzstoffen, miteinander reagiert und zwar unter Einsatz von im Siloxanteil verzweigten SiOC-verknüpften Polyethersiloxanen, hergestellt aus verzweigten, Acetoxygruppen tragenden Siloxanen.

Weitere Angaben zu den einsetzbaren Ausgangsstoffen, Katalysatoren sowie Hilfs- und Zusatzstoffen finden sich z.B auch. im Kunststoffhandbuch, Band 7, Polyurethane, Carl-Hanser-Verlag München, 1. Auflage 1966, 2. Auflage, 1983 und 3. Auflage, 1993. Die nachstehenden Verbindungen, Komponenten und Zusatzstoffe sind bevorzugt einsetzbar.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Bevorzugt werden Isocyanate in einem Bereich von 60 bis 350 mol%, besonders bevorzugt in einem Bereich von 60 bis 140 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie z.B. 2,4- und 2,6-Toluoldiisocyanat (TDI) und die entsprechenden Isomerengemische, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind z.B. in EP 1712578, EP 1161474, WO 00/58383, US 2007/0072951, EP 1678232 und der WO 2005/085310 aufgeführt, auf die hier in vollem Umfang Bezug genommen wird.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von PolyurethanSystemen, insbesondere PU-Schaumstoffen üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz. Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240:1971-12 bestimmt werden.

Bevorzugt einsetzbare Polyetherpolyole können nach bekannten Verfahren hergestellt werden, z.B. durch anionische Polymerisation von Alkylenoxiden in Gegenwart von Alkalihydroxiden, Alkylialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie z.B. Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie z.B. Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung (z.B. werden zur Herstellung von PU-Weichschäumen andere Polyole verwendet als bei der Herstellung von PU-Hartschaumstoffen).

Bevorzugt einsetzbare Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Bevorzugt einsetzbare Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von $CO_2$ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie z.B. in US-A 3900424 oder US-A 3953383 beschrieben sind. Des Weiteren sind mono- und binukleare Metallkomplexe zur Copolymerisation von $CO_2$ und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Bevorzugt einsetzbare Polyole auf Basis nachwachsender Rohstoffe "Natural oil based polyols" (NOPs) zur Herstellung von PU-Schäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von bevorzugt einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, z.B. durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 %, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine größere Härte des Schaums. Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung. Je nach Feststoffgehalt der Polyole können diese z.B. alleine oder z.B. in Abmischung mit den oben genannten ungefüllten Polyolen eingesetzt werden.

Eine weitere Klasse von bevorzugt einsetzbaren Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Eine weitere Klasse von bevorzugt einsetzbaren Polyolen stellen die sogenannten autokatalytischen Polyole, insbesondere autokatalytische Polyetherpolyole, dar. Solche Polyole basieren z.B. auf Polyether-Blöcken, vorzugsweise auf Ethylenoxid- und/oder Propylenoxid-Blöcken, und beinhalten zudem katalytisch aktive funktionelle Gruppen, wie z.B. stickstoffhaltige funktionelle Gruppen, insbesondere Amino-Gruppen, vorzugsweise tertiäre Amin-Funktionen, Harnstoff-Gruppen und/oder Heterocyclen enthaltend Stickstoff-Atome. Durch die Verwendung solcher autokatalytsichen Polyole bei der Herstellung von PU-Schaumstoffen, bevorzugt PU-Weichschaumstoffen, kann die benötigte Menge an ggf. zusätzlich verwendeten Katalysatoren je nach Anwendung gegebenfalls reduziert und/oder auf spezielle gewünschte Schaumeigenschaften angepasst werden. Geeignete Polyole sind z.B. in WO0158976 (A1), WO2005063841 (A1), WO0222702 (A1), WO2006055396 (A1), WO03029320 (A1), WO0158976 (A1), US6924321 (B2), US6762274 (B2), EP2104696 (B1), WO2004060956 (A1) oder WO2013102053 (A1) beschrieben und können z.B. unter den Handelsnamen Voractiv™ und/oder SpecFlex™ Activ bei der Firma Dow bezogen werden.

Je nach den geforderten Eigenschaften der resultierenden Schäume können vorteilhafterweise entsprechende Polyole verwendet werden, wie sie z.B. beschrieben werden in: US 2007/0072951 A1, WO 2007/111828, US 2007/0238800, US 6359022 oder WO 96/12759. Weitere Polyole sind dem Fachmann bekannt und können z.B. der EP-A-0380993 oder US-A-3346557 entnommen werden, auf die im vollen Umfang Bezug genommen wird.

Gemäß einer bevorzugten Ausführungsform der Erfindung, insbesondere zur Herstellung von Form-und hochelastischen PU-Weichschaumstoffen, werden zwei- und/oder dreifunktionelle Polyetheralkohole eingesetzt, die primäre Hydroxylgruppen, bevorzugt über 50 %, besonders bevorzugt über 80 %, aufweisen, insbesondere solche mit einem Ethylenoxidblock am Kettenende. Je nach den geforderten Eigenschaften dieser erfindungsgemäß bevorzugten Ausführungsform, insbesondere zur Herstellung der oben genannten Schaumstoffe, werden neben den hier beschriebenen Polyetheralkoholen vorzugsweise weitere Polyetheralkohole eingesetzt, die primäre Hydroxylgruppen tragen und überwiegend auf Ethylenoxid basieren, insbesondere mit einem Anteil an Ethylenoxidblöcken von > 70 %, bevorzugt > 90 %. Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 2500 bis 15000, bevorzugt 4500 bis 12000 und üblicherweise OH-Zahlen im Bereich von 5 bis 80, vorzugsweise 20 bis 50 mg KOH/g.

Gemäß einer weiteren bevorzugten Ausführungsform der Erfindung, insbesondere zur Herstellung von PU-Blockweichschaumstoffen, werden zwei- und/oder dreifunktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 2 bis 4, zahlengemittelte Molekulargewichte im Bereich von 500 bis 8000, vorzugsweise 800 bis 5000, besonders bevorzugt 2500 bis 4500 und üblicherweise OH-Zahlen im Bereich von 10 bis 100, vorzugsweise 20 bis 60 mg KOH/g.

Gemäß einer weiteren bevorzugten Ausführungsform der Erfindung, insbesondere zur Herstellung von PU-Schaumstoffen, vorzugsweise von PU-Weichschaumstoffen, bevorzugt zur Herstellung von Form- und hochelastischen Weichschaumstoffen, werden autokatalytische Polyole, wie oben beschrieben, eingesetzt.

Gemäß einer weiteren bevorzugten Ausführungsform der Erfindung, insbesondere zur Herstellung von PU-Polyesterweichschaumstoffen, werden Polyesteralkohole auf Basis von Diolen und/oder Triolen, bevorzugt Glycerin und/oder Trimethylolpropan, und aliphatischen Carbonsäuren, bevorzugt Adipinsäure, Korksäure, Azelainsäure und/oder Sebacinsäure, eingesetzt. Solche Polyesteralkohole besitzen vorzugsweise eine Funktionalität von 2 bis 4, besonders bevorzugt 2 bis 3, zahlengemittelte Molekulargewichte im Bereich von 200 - 4000, vorzugsweise 400 - 3000, besonders bevorzugt 600 - 2500 und üblicherweise OH-Zahlen im Bereich von 10- 1000, vorzugsweise 20 - 500, besonders bevorzugt 30 - 300 mg KOH/g.

Gemäß einer weiteren bevorzugten Ausführungsform der Erfindung, insbesondere zur Herstellung von Polyisocyanurat (PIR)-Hartschaumstoffen, werden Polyesteralkohole auf Basis von Diolen und/oder Triolen, bevorzugt Monoethylenglycol, und aromatischen Carbonsäuren, bevorzugt Phthalsäure und/oder Terephthalsäure, eingesetzt. Solche Polyesteralkohole besitzen vorzugsweise eine Funktionalität von 2 bis 4, besonders bevorzugt 2 bis 3, zahlengemittelte Molekulargewichte im Bereich von 200 - 1500, vorzugsweise 300 - 1200, besonders bevorzugt 400 - 1000 und üblicherweise OH-Zahlen im Bereich von 100 - 500, vorzugsweise 150 - 300, besonders bevorzugt 180 - 250 mg KOH/g.

Gemäß einer weiteren bevorzugten Ausführungsform der Erfindung, insbesondere zur Herstellung von PU-Hartschaumstoffen, werden zwei- bis acht-funktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 3 bis 8, zahlengemittelte Molekulargewichte im Bereich von 500 bis 2000, vorzugsweise 800 bis 1200 und üblicherweise OH-Zahlen im Bereich von 100 bis 1200, bevorzugt 120 bis 700, besonders bevorzugt 200 bis 600 mgKOH/g. Je nach den geforderten Eigenschaften dieser erfindungsgemäß bevorzugten Schaumstoffe können neben den hier beschriebenen Polyolen zusätzlich Polyetheralkohole, wie oben beschrieben mit größeren zahlengemittelten Molgewichten und niedrigeren OH-Zahlen, und/oder zusätzliche Polyesterpolyole, wie oben beschrieben basierend auf aromatischen Carbonsäuren, eingesetzt werden.

Gemäß einer weiteren bevorzugten Ausführungsform der Erfindung, insbesondere zur Herstellung von viskoelastischen PU-Schaumstoffen, werden vorzugsweise Gemische verschiedener, bevorzugt zweier oder dreier, mehrfunktioneller Polyesteralkohole und/oder Polyetheralkohole eingesetzt. Üblicherweise bestehen hier die eingesetzten Polyol-Kombinationen aus einem niedermolekularen "Crosslinker"-Polyol, beispielweise einem Hartschaum-Polyol, mit hoher Funktionalität (> 3) und/oder einem konventionellen hochmolekularen Blockweichschaum- oder HR-Polyol und/oder einem "Hypersoft"-Polyetherpolyol mit hohem Anteil an Ethylenoxidblöcken und mit zellöffnenden Eigenschaften.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350, besonders bevorzugt 70 bis 140. Ein Index von 100 steht für ein molares Verhältnis der reaktiven Gruppen von 1 zu 1.

Als Katalysatoren können im Rahmen dieser Erfindung zum Beispiel jegliche Katalysatoren für die Reaktionen Isocyanat-Polyol (Urethan-Bildung) und/oder Isocyanat-Wasser (Amin- und Kohlenstoffdioxid-Bildung) und/oder die Isocyanat-Dimerisierung (Uretdion-Bildung) Isocyanat-Trimerisierung (Isocyanurat-Bildung), Isocyanat-Isocyanat mit $CO_2$-Abspaltung (Carbodiimid-Bildung) und/oder Isocyanat-Amin (Harnstoff-Bildung) und/oder "sekundäre" Vernetzungsreaktionen wie Isocyanat-Urethan (Allophanat-Bildung) und/oder Isocyanat-Harnstoff (Biuret-Bildung) und/oder Isocyanat-Carbodiimid (Uretonimin-Bildung) eingesetzt werden.

Geeignete Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und Ammonium-Salze, und/oder metallhaltige Verbindungen.

Geeignete stickstoffhaltige Verbindungen als Katalysatoren, im Folgenden auch als stickstoffhaltige Katalysatoren bezeichnet, im Sinne der vorliegenden Erfindung sind alle stickstoffhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können.

Beispiele für geeignete stickstoffhaltige Verbindungen als Katalysatoren im Sinne der vorliegenden Erfindung sind bevorzugt Amine, insbesondere tertiäre Amine oder Verbindungen enthaltend eine oder mehrere tertiäre Amin-Gruppen, wie unter anderem die Amine Triethylamin, N,N-Dimethylcyclohexylamin, N,N-Dicyclohexylmethylamin, N,N-Dimethylaminoethylamin, N,N,N',N'-Tetra-methylethylen-1,2-diamin, N,N,N',N'-Tetramethylpropylen-1,3-diamin, N,N,N',N'-Tetramethyl-1,4-butandiamin, N,N,N',N'-Tetramethyl-1,6-hexandiamin, N,N,N',N",N"-Pentamethyldiethylentriamin, N,N,N'-Trimethylaminoethylethanolamin, N,N-Dimethylaminopropylamin, N,N-Diethylaminopropyl-amin, N,N-Dimethylaminopropyl-N',N'-dipropan-2-olamin, 2-[[3-(dimethylamino)propyl]methyl-amino]ethanol, 3-(2-Dimethylamino)ethoxy)propylamin, N,N-Bis[3-(dimethylamino)propyl]-amin, N,N,N',N",N"-Pentamethyldipropylentriamin, 1-[Bis[3-(dimethylamino)propyl]amino]-2-propanol, N,N-Bis[3-(dimethylamino)propyl]-N',N'-dimethylpropan-1,3-diamin, Triethylendiamin, 1,4-Diazabicyclo[2.2.2]octane-2-methanol, N,N'-Dimethylpiperazin, 1,2-Dimethylimidazol, N-(2-Hydroxypropyl)imidazol, 1-Isobutyl-2-methylimidazol, N-(3-Aminopropyl)imidazol, N-Methylimidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Aminoethyl)piperazin, N,N-Dimethylbenzylamin, N,N-Dimethylaminoethanol, N,N-Diethylaminoethanol, 3-Dimethylamino-1-propanol, N,N-Dimethylaminoethoxyethanol, N,N-Diethylaminoethoxyethanol, Bis(2-Dimethylaminoethylether), N,N,N'-Trimethyl-N'-(2-hydroxyethyl)bis(2-aminoethyl)ether, N,N,N'-Trimethyl-N-3'-aminopropyl(bisaminoethyl)ether, Tris(dimethylaminopropyl)hexahydro-1,3,5-triazin, 1,8-Diazabicyclo[5.4.0]undec-7-en, 1,5-Diazabicyclo[4.3.0]non-5-en, 1,5,7-triazabicyclo[4.4.0]dec-5-en, N-Methyl-1,5,7-triazabicyclo[4.4.0]dec-5-en, 1,4,6-triazabicyclo[3.3.0]oct-4-en, 1,1,3,3-Tetramethylguanidin, tert-Butyl-1,1,3,3-Tetramethylguanidin, Guanidin, 3-Dimethylaminopropylharnstoff, 1,3-Bis[3-(dimethylamino)propyl]harnstoff, Bis-N,N-(dimethylaminoethoxyethyl)isophoron-dicarbamat, 3-Dimethylamino-N,N-dimethylpropionamid und 2,4,6-Tris(dimethylaminomethyl)-phenol. Geeignete stickstoffhaltige Katalysatoren, nach dem Stand der Technik, können zum Beispiel von der Firma Evonik unter dem Handelsnamen TEGOAMIN® bezogen werden.

Je nach Anwendung kann es bevorzugt sein, dass bei der erfindungsgemäßen Herstellung von Polyurethanschaumstoffen, quaternisierte und/oder protonierte stickstoffhaltige Katalysatoren, insbesondere quaternisierte und/oder protonierte tertiäre Amine, eingesetzt werden.

Zur möglichen Quaternisierung stickstoffhaltiger Katalysatoren können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Stickstoffhaltige Katalysatoren können, sofern quaternisiert, einfach oder mehrfach quaternisiert sein. Vorzugsweise sind die stickstoffhaltigen Katalysatoren nur einfach quaternisiert. Bei einfacher Quaternisierung sind die stickstoffhaltigen Katalysatoren vorzugsweise an einem tertiären Stickstoffatom quaternisiert.

Stickstoffhaltige Katalysatoren können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll.

Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefelbasierende Säuren oder Bor-basierende Säuren eingesetzt werden.

Der Einsatz stickstoffhaltigen Katalysatoren, die nicht quaternisiert oder protoniert sind, ist im Sinne dieser Erfindung allerdings besonders bevorzugt.

Geeignete metallhaltige Verbindungen als Katalysatoren, im Folgenden auch als metallhaltige Katalysatoren bezeichnet, im Sinne der vorliegenden Erfindung sind alle metallhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können. Sie können zum Beispiel ausgewählt werden aus der Gruppe der metallorganischen oder organometallischen Verbindungen, metallorganischen oder organometallischen

Salze, organischen Metallsalze, anorganischen Metallsalze sowie aus der Gruppe der geladenen oder ungeladenen metallhaltigen Koordinationsverbindungen, insbesondere der Metall-Chelat-Komplexe.

Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt Ionenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, MetallOxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe).

Geeignete metallhaltige Verbindungen, insbesondere wie oben definiert, als mögliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallorganische Salze und organische Metallsalze, insbesondere wie oben definiert, als Katalysatoren im Sinne der vorliegenden Erfindung sind zum Beispiel Organozinn-, Zinn-, Zink-, Bismuth und Kalium-Salze, insbesondere entsprechende Metall-Carboxylate, -Alkoholate, -Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercapto-acetat, Dimethylzinn-bis-2-ethylhexylmercaptoacetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zinn(II)-oleat, Zink(II)-acetat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kaliumricinoleat.

Bei der erfindungsgemäßen Herstellung von Polyurethanschaumstoffen kann es bevorzugt sein, die Verwendung von metallorganischen Salzen wie zum Beispiel von Dibutylzinndilaurat auszuschließen.

Geeignete mögliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Bei der erfindungsgemäßen Herstellung von Polyurethanschaumstoffen, kann es je nach Art der Anwendung, bevorzugt sein, einbaubare/reaktive oder hochmolekulare Katalysatoren zu verwenden. Solche Katalysatoren können zum Beispiel ausgewählt werden aus der Gruppe der metallhaltigen Verbindungen, vorzugsweise aus der Gruppe der Zinn-, Zink-, Bismuth- und/oder Kalium-haltigen Verbindungen, insbesondere aus der Gruppe der Metall-Carboxylate der vorgenannten Metalle wie zum Beispiel die Zinn-, Zink-, Bismuth- und/oder Kaliumsalze der Isononansäure, Neodecansäure, Ricinolsäure und/oder Ölsäure, und/oder aus der Gruppe der stickstoffhaltigen Verbindungen, insbesondere aus der Gruppe der emissionsarmen Amine und/oder der emissionsarmen Verbindungen enthaltend eine oder mehrere tertiäre Amine-Gruppen, beispielsweise beschrieben durch die Amine Dimethylaminoethanol, N,N-Dimethyl-N',N'-di(2-hydroxypropyl)-1,3-diaminopropan, N,N-Dimethylaminopropylamin, N,N,N'-Trimethyl-N'-hydroxyethylbis(aminoethyl)ether, N-[2-[2-(Dimethylamino)ethoxy]ethyl]-N-methyl-1,3-propandiamin, N,N-Bis[3-(dimethylamino)propyl]-1,3-propandiamin, 1,1'-[(3-{bis[3-(dimethylamino)propyl]-amino}propyl)imino]dipropan-2-ol, Bis-(N,N-dimethylaminopropyl)amin, 6-Dimethylaminoethyl-1-hexanol, N-(2-Hydroxypropyl)imidazol, N-(3-Amino-propyl)imidazol, Aminopropyl-2-methylimidazol, N,N,N'-Trimethylaminoethanolamin, 2-(2-(N,N-Dimethylaminoethoxy)ethanol, N-(Dimethyl-3-aminopropyl)harnstoff-derivate und Alkylaminooxamide, wie Bis-(N-(N',N'-dimethylaminopropyl))oxamid, Bis-(N-(N',N'-dimethylaminoethyl))-oxamid, Bis-(N-(N',N'-Imidazolidinylpropyl)oxamid, Bis-(N-(N',N'-diethylaminoethyl))-oxamid, Bis-(N-(N',N'-diethylaminopropyl)oxamid, Bis-(N-(N',N'-diethylaminoethyl)oxamid, Bis-(N-(N',N'-diethylimino-1-methylpropyl)oxamid, Bis-(N-(3-Morpholinopropylyl)-oxamid und deren Umsetzungsprodukte mit Alkylenoxiden, vorzugsweise mit einem Molgewicht im Bereich zwischen 160 und 500 g/mol, sowie Verbindungen der allgemeine Formel:

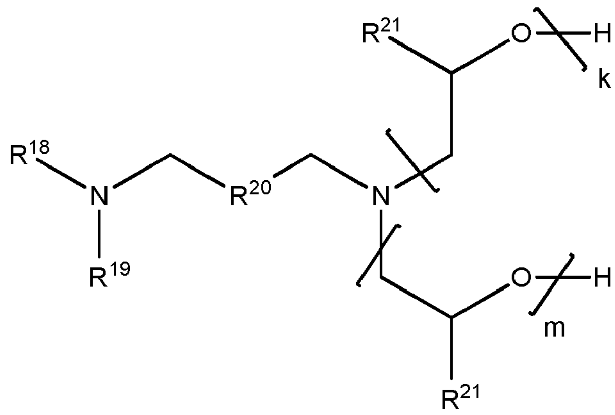

mit

$R^{18}$, $R^{19}$ = $-C_aH_{2a+i}$ mit a = 1 - 4 für acyclische Gruppen

$R^{18}$, $R^{19}$ = $-C_bH_cN_d-$ mit b = 3 - 7, c = 6 - 14, d = 0 - 2 für cyclische Gruppen

$R^{20}$ = $C_eH_fO_9$ mit e = 0 - 4, f = 0 - 8, g = 0- 2

$R^{21}$ = -H, $-CH_3$, $-C_2H_5$

k, m = gleich oder verschieden 1 - 5.

Derartige Katalysatoren und/oder Mischungen werden beispielsweise unter dem Namen Jeffcat® ZF-10, Lupragen® DMEA, Lupragen® API, Toyocat® RX 20 und Toyocat® RX 21 , DABCO® RP 202, DABCO® RP 204, DABCO® NE 300, DABCO® NE 310, DABCO® NE 400, DABCO® NE 500, DABCO® NE 600, DABCO® NE 650, DABCO® NE 660, DABCO® NE 740, DABCO® NE 750, DABCO® NE 1060, DABCO® NE 1080, DABCO® NE 1082 und DABCO® NE 2039, Niax® EF 860, Niax® EF 890, Niax® EF 700, Niax® EF 705, Niax® EF 708, Niax® EF 600, Niax® EF 602, Kosmos® 54, Kosmos® EF, und Tegoamin® ZE 1 im Handel angeboten.

Je nach Anwendung kann es bevorzugt sein, dass bei der erfindungsgemäßen Herstellung von Polyurethanschaumstoffen, ein oder mehrere stickstoffhaltige und/oder metallhaltige Katalysatoren eingesetzt werden. Wenn mehr als ein Katalysator eingesetzt wird, können die Katalysatoren in beliebigen Gemischen untereinander eingesetzt werden. Hierbei können die Katalysatoren einzeln während der Verschäumung, zum Beispiel im Sinne einer Vordosierung im Mischkopf, und/oder als vorgemischte Katalysatorkombination eingesetzt werden.

Der Ausdruck "vorgemischte Katalysatorkombination", im Folgenden auch als Katalysatorkombination bezeichnet, umfasst im Sinne dieser Erfindung insbesondere fertige Mischungen von metallhaltigen Katalysatoren und/oder stickstoffhaltigen Katalysatoren und/oder entsprechenden protonierten und/oder quaternisierten stickstoffhaltigen Katalysatoren sowie optional noch weiterer Inhalts- oder Zusatzstoffen wie zum Beispiel Wasser, organischen Lösungsmittelen, Säuren zur Blockierung der Amine, Emulgatoren, Tenside, Treibmitteln, Antioxidantien, Flammschutzmittel, Stabilisatoren und/oder Siloxanen, vorzugsweise Polyethersiloxanen, die bereits vor der Verschäumung als solche vorliegen und während der Verschäumungsvorgangs nicht als Einzelkomponenten zugegeben werden müssen.

Je nach Anwendung kann es bevorzugt sein, wenn aus der Summe aller eingesetzten stickstoffhaltigen Katalysatoren, gegenüber der Summe der metallhaltigen Katalysatoren, insbesondere Kalium-, Zink- und/oder Zinn-Katalysatoren, ein molares Mengenverhältnis von 1:0,05 bis 0,05:1, vorzugsweise 1:0,07 bis 0,07:1 und besonders bevorzugt 1:0,1 bis 0,1:1 resultiert.

Um eine Reaktion der Komponenten untereinander zu vermeiden, insbesondere Reaktion von stickstoffhaltigen Katalysatoren mit metallhaltigen Katalysatoren, insbesondere Kalium-, Zink-und/oder Zinn-Katalysatoren, kann es bevorzugt sein, diese Komponenten getrennt voneinander zu lagern und dann der Isocyanat- und Polyol-Reaktionsmischung gleichzeitig oder nacheinander zuzuführen.

Geeignete Einsatzmengen an Katalysatoren richten sich nach dem Typ des Katalysators und liegen vorzugsweise im Bereich von 0,005 bis 10,0 pphp, besonders bevorzugt im Bereich von 0,01 bis 5,00 pphp (= Gewichtsteile bezogen auf 100 Gewichtsteile Polyol) bzw. 0,10 bis 10,0 pphp für Kaliumsalze.

Bevorzugte Wasser-Gehalte im erfindungsgemäßen Verfahren hängen davon ab, ob zusätzlich zum ggf. einsetzbaren Wasser noch physikalische Treibmittel eingesetzt werden oder nicht. Bei rein Wasser-getriebenen Schäumen liegen die Werte typischerweise bei vorzugsweise 1 bis 20 pphp, werden zusätzlich andere Treibmittel eingesetzt, verringert sich die Einsatzmenge auf üblicherweise z.B. 0 oder z.B. 0,1 bis 5 pphp. Zur Erlangung hoher Schaumraumgewichte werden vorzugsweise weder Wasser noch andere Treibmittel eingesetzt.

Geeignete, ggf. einsetzbare physikalische Treibmittel im Sinne dieser Erfindung sind Gase, z.B. verflüssigtes $CO_2$, und leichtflüchtige Flüssigkeiten, z.B. Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, aber auch olefinische Fluorkohlenwasserstoffe wie HFO 1233zd oder HFO1336mzzZ, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben oder an Stelle von ggf. Wasser und ggf. physikalischen Treibmitteln, können auch andere chemische Treibmittel, die mit Isocyanaten unter Gasentwicklung reagieren, wie z.B. Ameisensäure, Carbamate oder Carbonate eingesetzt werden.

Geeignete Stabilisatoren gegen oxidativen Abbau, so genannte Antioxidantien, sind vorzugsweise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2'-Hydroxyphenyl)benzotriazole, 2-Hydroxybenzophenone, Benzoesäuren und Benzoate, Phenole, insbesondere enthaltend tert-Butyl-und oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone. Als Phenole können z.B. Ester basierend auf 3-(4-Hydroxyphenyl)propionsäure wie Triethyleneglycol-bis-[3-(3-tert-butyl-4-hydroxy-5-methylphenyl)propionat], Octadecyl-3-(3,5-di-tert-butyl-4-hydroxyphenyl)propionat, oder Methylendiphenole wie 4,4'-Butyliden-bis-(6-tert-butyl-3-methylphenol) eingesetzt werden. Als 2-(2'-Hydroxyphenyl)benzotriazole sind z.B. 2-(2'Hydroxy-5'-methylphenyl)benzotriazol oder 2-(2'Hydroxy-3',5'-di-tert-butylphenyl)benzotriazol bevorzugt. Als 2-Hydroxybenzophenone sind z.B. 2-Hydoxy-4-n-octoxybenzophenon, 2,2',4,4'-tetrahydroxybenzophenon oder 2,4-dihydroxybenzophenon bevorzugt. Als Benzoate sind z.B. Hexadecyl-3,5-di-tert-butyl-4-hydroxybenzoat oder Tannine bevorzugt.

Geeignete Flammschutzmittel im Sinne dieser Erfindung sind alle Substanzen, die nach dem Stand der Technik als dafür geeignet betrachten werden. Bevorzugte Flammschutzmittel sind z.B. flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, z.B. halogenierte Polyole, sowie Feststoffe wie Blähgraphit und Melamin geeignet.

Als Biozide können z.B. handelsübliche Produkte verwendet werden, wie Chlorophen, Benzisothiazolin, Hexahydro-1,3,5-tris(hydroxyethyl-s-triazin), Chloromethylisothiazolin, Methylisothiazolin oder 1,6-Dihydroxy-2,5-dioxohexan, die unter den Handelsnamen BIT 10, Nipacide BCP, Acticide MBS, Nipacide BK, Nipacide CI, Nipacide FC bekannt sind.

Zur Beeinflussung der Schaumeigenschaften von PU-Schäumen können bei deren Herstellung insbesondere Siloxane bzw. organomodifizierte Siloxane eingesetzt werden, wobei die im Stand der Technik genannten Substanzen verwendet werden können. Vorzugsweise werden solche Verbindungen eingesetzt, die für die jeweiligen PU-Schaumtypen (PU-Hartschäume, PU-Heissweichschäume, viskoelastische PU-Schäume, PU-Esterschäume, PU-Kaltweichschäume (HR- PU-Schäume), halbharte PU-Schäume) besonders geeignet sind. Geeignete (organomodifizierte) Siloxane sind z.B. in den folgenden Schriften beschrieben: EP 0839852, EP 1544235, DE 102004001408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4147847, EP 0493836 und US 4855379 beschrieben.

Die erfindungsgemäß einzusetzenden im Siloxanteil verzweigten SiOC-verknüpften Polyethersiloxane, hergestellt aus verzweigten, Acetoxygruppen tragenden Siloxanen wirken als Schaumstabilisatoren. Als zusätzliche Schaumstabilisatoren können alle aus dem Stand der Technik bekannten Stabilisatoren eingesetzt werden. Nachfolgend werden demgemäß zunächst die zusätzlich einsetzbaren Schaumstabilisatoren beschrieben, deren Einsatz optional ist:
Bevorzugt werden als zusätzliche Schaumstabilisatoren solche auf der Basis von Polydialkylsiloxan-Polyoxyalkylen-copolymeren, wie sie allgemein bei Herstellung von Urethanschaumstoffen verwendet werden, eingesetzt. Diese Verbindungen sind vorzugsweise so aufgebaut, dass z.B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Schaumstabilisatoren sind sind z.B. in den folgenden Schriften beschrieben: EP 0839852, EP 1544235, DE 102004001408, WO 2005/118668, US 2007/0072951, DE 2533074, EP 1537159 EP 533202, US 3933695, EP 0780414, DE 4239054, DE 4229402, EP 867465. Die Herstellung entsprechenderr Si-Verbindungen kann wie im Stand der Technik beschrieben erfolgen. Geeignete Beispiele sind z. B. in US 4147847, EP 0493836 und US 4855379 beschrieben. Geeignete Stabilisatoren können von der Evonik Industries AG unter dem Handelsnamen TEGOSTAB® bezogen werden.

Geeignete Siloxane, die zusätzlich eingesetzt werden können, haben insbesondere die folgende Struktur:

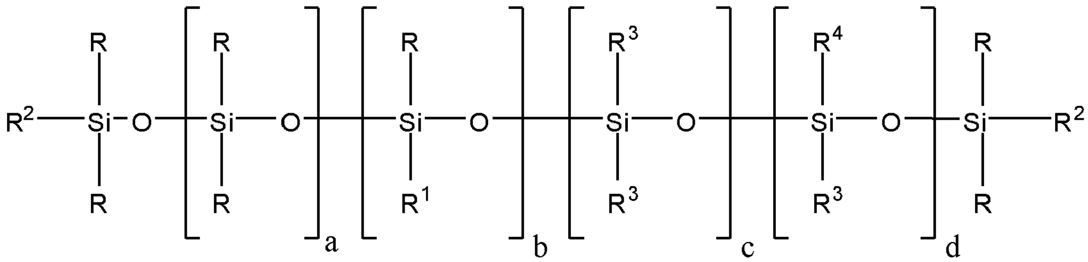

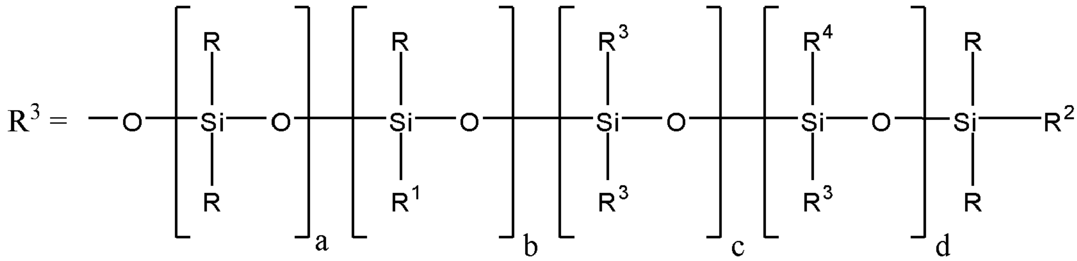

(V)

worin

- a unabhängig voneinander 0 bis 500 ist, vorzugsweise 1 bis 300 und insbesondere 2 bis 150,
- b unabhängig voneinander 0 bis 60 ist, vorzugsweise 1 bis 50 und insbesondere 1 bis 30,
- c unabhängig voneinander 0 bis 10, vorzugsweise 0 oder > 0 bis 5, ist,
- d unabhängig voneinander 0 bis 10, vorzugsweise 0 oder > 0 bis 5, ist,

mit der Maßgabe, dass pro Molekül der Formel (V) die mittlere Anzahl $\Sigma d$ der T-Einheiten [$SiR^3R^4O$] und die mittlere Anzahl $\Sigma c$ der Q-Einheiten [$SiR^3R^3O$] pro Molekül jeweils nicht größer als 50, die mittlere Anzahl $\Sigma a$ der D-Einheiten [SiRRO] pro Molekül nicht größer als 2000 und die mittlere Anzahl $\Sigma b$ der $R^1$ tragenden Siloxy-Einheiten pro Molekül nicht größer als 100 ist,

- R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
- $R^2$ unabhängig voneinander $R^1$ oder R ist,
- $R^1$ ist ungleich R und unabhängig voneinander ein organischer Rest und/oder ein Polyetherrest, bevorzugt ist der $R^1$ ein Rest ausgewählt aus der Gruppe $-CH_2-CH_2-CH_2-O-(CH_2-CH_2O-)_x-(CH_2-CH(R')O-)_y-R''$ $-CH_2-CH_2-O-(CH_2-CH_2O-)_x-(CH_2-CH(R')O-)_y-R''$ $-O-(C_2H_4O-)_x-(C_3H_5O-)_y-R'$ $-CH_2-R^{IV}$ $-CH_2-CH_2-(O)_{x'}-R^{IV}$ $-CH_2-CH_2-CH_2-O-CH_2-CH(OH)-CH_2OH$

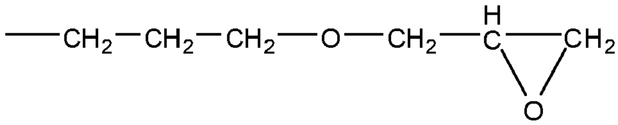

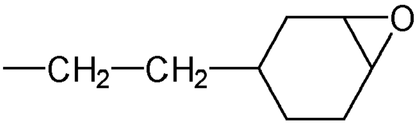

oder $-CH_2-CH_2-CH_2-O-CH_2-C(CH_2OH)_2-CH_2-CH_3$ ist, worin

- x 0 bis 100, vorzugsweise > 0, insbesondere 1 bis 50,
- x' 0 oder 1,
- y 0 bis 100, vorzugsweise > 0, insbesondere 1 bis 50,
- z 0 bis 100, vorzugsweise > 0, insbesondere 1 bis 10,
- R' unabhängig voneinander eine gegebenenfalls substituierte, z.B. mit Alkylresten, Arylresten oder Halogenalkyl- oder Halogenarylresten substituierte, Alkyl- oder Arylgruppe mit 1 bis 12 C-Atomen ist, wobei innerhalb eines Restes $R^1$ und/oder eines Moleküls der Formel (V) untereinander verschiedene Substituenten R' vorliegen können, und
- R" unabhängig voneinander ein Wasserstoffrest oder eine Alkylgruppe mit 1 bis 4 C-Atomen, eine Gruppe -C(O)-R'" mit R'" = Alkylrest, eine Gruppe $-CH_2-O-R'$, eine Alkylarylgruppe, wie z. B. eine Benzylgruppe, die Gruppe -C(O)NH-R' bedeutet,
- $R^{IV}$ ein linearer, cyclischer oder verzweigter, auch weiter substituierter, z. B. mit Halogenen substituierter, Kohlenwasserstoffrest mit 1 bis 50, vorzugsweise 9 bis 45, bevorzugt 13 bis 37 C-Atomen ist,
- $R^4$ unabhängig voneinander R, $R^1$ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,

mit der Maßgabe, dass mindestens ein Substituent aus $R^1$, $R^2$ und $R^4$ nicht gleich R ist. Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Die Herstellung der Siloxane nach Formel (V) kann nach den bekannten Methoden erfolgen, wie z.B. die edelmetallkatalysierte Hydro-silylierungsreaktion von Verbindungen, die eine Doppelbindung enthalten, mit entsprechenden Wasserstoffsiloxanen wie z.B. in EP 1520870, beschrieben. Die Schrift EP 1520870 wird hiermit als Referenz eingeführt und gilt als Teil des Offenbarungsgehaltes der vorliegenden Erfindung.

Als Verbindungen, die zumindest eine Doppelbindung pro Molekül aufweisen, können z. B. $\alpha$-Olefine, Vinylpolyoxyalkylene und/oder Allylpolyoxyalkylene eingesetzt werden. Vorzugsweise werden Vinylpolyoxyalkylene und/oder Allylpolyoxyalkylene ein-gesetzt. Besonders bevorzugte Vinylpolyoxyalkylene sind z. B. Vinylpolyoxyalkylene mit einem Molgewicht im Bereich von 100 g/Mol bis 8.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevor-zugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion end-verkappt sein können. Besonders bevorzugt werden als Verbindungen, die zumindest eine Doppelbindung pro Molekül aufweisen, die in den Beispielen genannten $\alpha$-Olefine, Allylalkohol, 1-Hexenol, Vinylpolyoxyalkylene und/oder Allylpolyoxyalkylene sowie Allylglycidylether und Vinylcyclohexenoxid eingesetzt.

Bevorzugt werden im Rahmen der vorliegenden Erfindung optionale Siloxane der Formel (V) eingesetzt, worin a unabhängig voneinander 1 bis 300 ist, b unabhängig voneinander 1 bis 50 ist, c unabhängig voneinander 0 bis 4 ist, d unabhängig voneinander 0 bis 4 ist, mit der Maßgabe, dass pro Molekül der Formel (V) die mittlere Anzahl $\Sigma d$ der T-Einheiten und die mittlere Anzahl $\Sigma c$ der Q-Einheiten pro Molekül jeweils nicht größer als 20, die mittlere Anzahl $\Sigma a$ der D-Einheiten pro Molekül nicht größer als 1500 und die mittlere Anzahl $\Sigma b$ der $R^1$ tragenden Siloxy-Einheiten pro Molekül nicht größer als 50 ist.

In einer besonders bevorzugten Ausführungsform der vorliegenden Erfindung werden Siloxane der Formel (V)

eingesetzt worin $R^1$ unabhängig voneinander ein organischer Rest $-CH_2-CH_2-CH_2-O-(CH_2-CH_2O-)_{x-}(CH_2-CH(R')O-)_y-R''$ $-CH_2-CH_2-O-(CH_2-CH_2O-)_{x-}(CH_2-CH(R')O-)_y-R''$
$-CH_2-R^{IV}$ ist, worin x 0 bis 100, vorzugsweise > 0, insbesondere 1 bis 50 und y 0 bis 100, vorzugsweise > 0, insbesondere 1 bis 50 ist, R' unabhängig voneinander verschieden sein können und Methyl-, Ethyl-und/oder Phenyl-Reste darstellen. R" unabhängig voneinander ein Wasserstoffrest oder eine Alkylgruppe mit 1 bis 4 C-Atomen, eine Gruppe -C(O)-R'" mit R'" = Alkylrest, eine Gruppe $-CH_2-O-R'$, eine Alkylarylgruppe, wie z. B. eine Benzylgruppe, die Gruppe -C(O)NH-R' bedeutet, $R^{IV}$ ein linearer, cyclischer oder verzweigter, gegebenenfalls substituierter, z. B. mit Halogenen substituierter, Kohlenwasserstoffrest mit 1 bis 50, vorzugsweise 9 bis 45, bevorzugt 13 bis 37 C-Atomen ist.

In einer weiteren bevorzugten Ausführungsform der vorliegenden Erfindung, vorzugsweise zur Herstellung von Hartschaumstoffen, werden Siloxane der Formel (V) eingesetzt, worin $R^1$ unabhängig voneinander ein organischer Rest ausgewählt aus der Gruppe umfassend $-CH_2-CH_2-CH_2-O-(CH_2-CH_2O-)_{x-}(CH_2-CH(R')O-)_y-R''$ und/oder $-CH_2-CH_2-O-(CH_2-CH_2O-)_x-(CH_2-CH(R')O-)_y-R''$ und /oder
$-CH_2-R^{IV}$ ist, worin x 0 bis 100, vorzugsweise > 0, insbesondere 1 bis 50, y 0 bis 100, vorzugsweise > 0, insbesondere 1 bis 50, R' Methyl ist und R" unabhängig voneinander ein Wasserstoff-rest oder eine Alkylgruppe mit 1 bis 4 C-Atomen, eine Gruppe C(O)-R'" mit R'" = Alkylrest, eine Gruppe -CH2-O-R', eine Alkylarylgruppe, wie z. B. eine Benzylgruppe, die Gruppe C(O)NH-R' bedeutet, wobei der molare Anteil an Oxyethylen-Einheiten bezogen auf die Gesamtmenge Oxyalkyleneinheiten mind. 70% der Oxalkylen-Einheiten ausmacht, also $x/(x+y) > 0,7$ ist. Unter dieser Voraussetzung ist bevorzugt, dass Außerdem die Polyoxyalkylen-Kette am Ende einen Wasserstoff trägt. Unter diesen Vorrausetzungen werden gemäß einer weiteren bevorzugten Ausführungsform der Erfindung (insbesondere im Rahmen der erfindungsgemäßen Verwendung) Siloxane der Formel (V) verwendet in denen die in Rest $R^1$ enthaltenen Oxalkylen-Einheiten ausschließlich Oxyethylen-Einheiten sind und dabei der Rest R" kein Wasserstoff ist.

In einer weiteren bevorzugten Ausführungsform der vorliegenden Erfindung, vorzugsweise zur Herstellung von Blockweichschaumstoffen, werden Siloxane der Formel (V) eingesetzt, worin R1 unabhängig voneinander ein organischer Rest ausgewählt aus der Gruppe umfassend $-CH_2-CH_2-CH_2-O-(CH_2-CH_2O-)_x-(CH_2-CH(R')O-)_y-R''$ und/oder $-CH_2-CH_2-O-(CH_2-CH_2O-)_x-(CH_2-CH(R')O-)_y-R''$ und /oder
$-CH_2-R^{IV}$ ist, worin x 0 bis 100, vorzugsweise > 0, insbesondere 1 bis 50, y 0 bis 100, vorzugsweise > 0, insbesondere 1 bis 50, R' Methyl ist und R" unabhängig voneinander ein Wasserstoff-rest oder eine Alkylgruppe mit 1 bis 4 C-Atomen, eine Gruppe C(O)-R'" mit R'" = Alkylrest, eine Gruppe -CH2-O-R', eine Alkylarylgruppe, wie z. B. eine Benzylgruppe, die Gruppe C(O)NH-R' bedeutet, wobei der molare Anteil an Oxyethylen-Einheiten bezogen auf die Gesamtmenge Oxyalkyleneinheiten maximal 60% der Oxalkylen-Einheiten ausmacht, also $x/(x+y) < 0,6$ ist.

In einer weiteren bevorzugten Ausführungsform der vorliegenden Erfindung werden Siloxane der Formel (V) verwendet in denen bei der Hydrosilylierung unter anderem Olefine eingesetzt werden wodurch $R^1$ mindestens zu 10 mol%, bevorzugt zu mindestens 20 mol%, besonders bevorzugt zu mindestens 40 mol% aus $CH_2-R^{IV}$ besteht, wobei $R^{IV}$ ein linearer oder verzweigter Kohlenwasserstoff mit 9 bis 17 Kohlenstoffatomen ist.

In einer weiteren bevorzugten Ausführungsform der vorliegenden Erfindung (insbesondere im Rahmen der erfindungsgemäßen Verwendung) werden Siloxane der Formel (V) verwendet in denen die endständigen, oder auch alpha- und omega- genannten, Positionen am Siloxan mindestens teilweise mit Resten $R^1$ funktionalisiert sind. Es sind hierbei zumindest 10 mol-%, bevorzugt zumindest 30 mol-%, besonders bevorzugt zumindest 50 mol-% der endständigen Positionen mit Resten $R^1$ funktionalisiert.
In einer besonders bevorzugten Ausführungsform der Erfindung werden Siloxane der Formel (V) verwendet in denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste $R^1$ im Siloxan entfällt.

In einer weiteren bevorzugten Ausführungsform der vorliegenden Erfindung werden Siloxane der Formel (V) verwendet in denen der Rest R für Methyl steht und die Anzahl der Strukturelemente mit dem Index a in größerer Anzahl vorliegen als die Strukturelemente mit dem Index b, in der Art, dass der Quotient a/b mindestens gleich sieben , vorzugsweise größer 10, besonders bevorzugt größer 12 ist.

In einer weiteren bevorzugten Ausführungsform der vorliegenden Erfindung werden Siloxane der Formel (V) verwendet in denen die in Rest $R^1$ enthaltenen Oxalkylen-Einheiten ausschließlich Oxyethylen-Einheiten sind und dabei der Rest R" kein Wasserstoff ist.

Im vorangegangenen Teil wurden die zusätzlich einsetzbaren Schaumstabilisatoren beschrieben, die optional einsetzbar sind.

Das erfindungsgemäße Verfahren erfolgt unter Einsatz von im Siloxanteil verzweigten SiOC-verknüpften Polyethersiloxanen (e), hergestellt aus verzweigten, Acetoxygruppen tragenden Siloxanen (f).

Die Bereitstellung von (e) und (f) wird nachfolgend beschrieben.

Zugänge zu verzweigten, Acetoxygruppen tragenden Siloxanen sind in der Patentliteratur beschrieben. Die bisher unveröffentlichten europäischen Patentanmeldungen mit den Anmeldeaktenzeichen EP18172882.5, EP18172876.7, EP17195510.7, EP17204277.2, EP18189073.2 und EP 18210035.4 widmen sich der Herstellung von

trifluormethansulfonsauren, äquilibrierten Acetoxysiloxanen des verzweigten Strukturtyps.

Der Lehre der EP 18189073.2 beispielsweise folgend werden zyklische Siloxane, insbesondere umfassend $D_4$ und/oder $D_5$, und/oder Mischungen zyklisch-verzweigter Siloxane vom D/T-Typ unter Einsatz von Trifluormethansulfonsäure als Katalysator mit Acetanhydrid und unter Zusatz von Essigsäure umgesetzt. Des Weiteren führt die EP 18189073.2 aus, dass sich sowohl Mischungen zyklischer-verzweigter Siloxane vom D/T-Typ, die aus D- und T-Einheiten aufweisenden Siloxanen bestehen und deren mit $^{29}$Si-NMR-Spektroskopie bestimmbarer summarischer Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und die des Weiteren vorteilhafterweise zumindest 5 Gew.-% Siloxancyclen, wie vorzugsweise Oktamethylcyclotetrasiloxan ($D_4$), Dekamethylcyclopentasiloxan ($D_5$) und/oder deren Mischungen enthalten,
als auch Mischungen zyklischer-verzweigter, D- und T-Einheiten aufweisender Siloxane deren mit $^{29}$Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, besonders gut für die Herstellung endäquilibrierter, Acetoxyfunktionen aufweisender Siloxane des verzweigten Strukturtyps eignen.

Die noch nicht offengelegte Europäische Anmeldeschrift mit dem Aktenzeichen EP18210035.4 beschreibt ebenso (i) Reaktionssysteme zur Herstellung Acetoxyfunktionen tragender Siloxane, umfassend a) Alkoxygruppen tragende Silane und/oder Siloxane und/oder b) Acetoxygruppen tragende Silane und/oder Siloxane, c) Hydroxygruppen tragende Silane und/oder Siloxane c) gegebenenfalls einfache Siloxanzyklen und/oder DT-Zyklen, d) ein Reaktionsmedium, umfassend Essigsäureanhydrid, Perfluoralkansulfonsäure sowie vorzugsweise Essigsäure, (ii) ein Verfahren zur Herstellung verzweigter Acetoxyfunktionen tragender Siloxane. Gemäß jener Anmeldung ist es beispielsweise möglich, zu einem terminale Acetoxygruppen tragenden, verzweigten Siloxan zu gelangen, indem man ein terminale Alkoxygruppen tragendes, verzweigtes Silikonäquilibrat ( = Voräquilibrat) als alleinigen Reaktanden mit einem Reaktionsmedium bestehend aus Essigsäureanhydrid, Trifluormethansulfonsäure und Essigsäure zur Umsetzung bringt.

Verzweigte, Acetoxygruppe tragende Siloxane (f) können insbesondere erhalten werden aus der Umsetzung von

i) Alkoxygruppen tragenden Silanen und/oder Siloxanen, und/oder
ii) Hydroxygruppen tragenden Silanen und/oder Siloxanen, und/oder
iii) einfachen Siloxanzyklen und / oder DT-Zyklen,

mit Acetanhydrid, Supersäure, insbesondere Trifluormethansulfonsaure, sowie Essigsäure. Dies entspricht einer bevorzugten Ausführungsform der Erfindung.

Supersäuren im Sinne der Erfindung sind solche Säuren, die einen pKa-Wert kleiner -3,0 aufweisen, vorzugsweise fluorierte und/ oder perfluorierte Sulfonsäuren, Fluorsulfonsäure $HSO_3F$, Fluor-Antimonsäure $HSbF_6$, Perfluorbutansulfonsäure $C_4F_9SO_3H$ und/oder ganz besonders bevorzugt Trifluormethansulfonsäure $CF_3SO_3H$.

Insbesondere können im Rahmen der vorliegenden Erfindung ein Alkoxygruppen tragendes, mindestens eine T- und/ oder Q-Gruppe enthaltendes Silan und/oder Siloxan und/oder DT-Zyklen eingesetzt werden. Dies entspricht einer bevorzugten Ausführungsform der Erfindung.

Gemäß einer bevorzugten Ausführungsform der Erfindung setzt man zur Herstellung der verzweigten, Acetoxygruppen tragenden Siloxane Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix hinzu.

Der Katalysator Supersäure, insbesondere Trifluormethansulfonsäure, wird gemäß einer bevorzugten Ausführungsform der Erfindung zur Herstellung der verzweigten, Acetoxygruppen tragenden Siloxane in Mengen von 0,1 bis 1,0 Massenprozent, bevorzugt 0,1 bis 0,3 Massenprozent, bezogen auf die Reaktionsmatrix eingesetzt.

Besonders bevorzugt im Rahmen der vorliegenden Erfindung ist der Einsatz endäquilibrierter, Acetoxyfunktionen aufweisender Siloxane des verzweigten Strukturtyps.

Mit dem Begriff "endäquilibriert" ist gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtcylengehalt definiert als die Summe der $D_4$-, $D_5$-, $D_6$-Gehalte bezogen auf die Siloxanmatrix und festgestellt nach der Derivatisierung der $\alpha,\omega$-Diacetoxypotydimethytsitoxane zu den entsprechenden $\alpha,\omega$-Diisopropoxypotydimethytsitoxanen beziehungsweise nach der Derivatisierung der verzweigten Acetoxysiloxane zu den entsprechenden verzweigten Isopropoxysiloxanen herangezogen werden. Der zuvor genannte Einsatz der Essigsäure ermöglicht hier die problemlose Unterschreitung sonst üblicher Gleichgewichtsanteile von von etwa 8 Gewichtsprozent des Gesamtcyclengehaltes bei den verzweigten Acetoxysiloxanen. Demzufolge entspricht es einer bevorzugten Ausführungsform wenn Gleichgewichtsanteile des Gesamtcyclengehaltes von kleiner 8, vorzugsweise kleiner 7 Gewichtsprozent bei den verzweigten Acetoxysiloxanen unterschritten werden. Die Derivatisierung zu den verzweigten Isopropoxysiloxanen wird hierbei bewusst gewählt, um eine unter den Bedingungen

der gaschromatographischen Analyse gegebenenfalls erfolgende, thermisch induzierte Rückspaltungsreaktion der verzweigten Acetoxysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die Bereitstellung der verzweigten, Acetoxygruppe tragenden Siloxane wird im Beispielteil exemplarisch gezeigt.

Die Bereitstellung von im Siloxanteil verzweigten SiOC-verknüpften Polyethersiloxanen (e) erfolgt gemäß einer bevorzugten Ausführungsform der Erfindung durch Umsetzung der verzweigten, Acetoxygruppen tragenden Siloxane (f) mit Polyetherolen. Sie wird im Beispielteil exemplarisch gezeigt.

Wenn die Umsetzung der verzweigten, Acetoxygruppen tragenden Siloxane (f) mit Polyetherolen in Gegenwart mindestens einer Base, insbesondere in Gegenwart von Natriumhydrogencarbonat, Ammoniak oder eines organischen Amins, erfolgt, so liegt eine bevorzugte Ausführunsform der Erfindung vor.

Wenn diese zuvor genannte Umsetzung der verzweigten, Acetoxygruppen tragenden Siloxane (f) mit Polyetherolen unter Verwendung eines inerten Lösungsmittels, bevorzugt unter Verwendung eines inerten und zugleich mit entstehender und gegebenenfalls bereits vorhandener Essigsäure Azeotrop bildenden Lösungsmittels erfolgt, wobei das inerte Lösungsmittel vorteilhafterweise ein aromatisches, bevorzugt alkylaromatisches Lösungsmittel und ganz besonders bevorzugt Toluol ist, so liegt eine weitere bevorzugte Ausführungsform der Erfindung vor.

Wenn die Umsetzung der verzweigten, Acetoxygruppen tragenden Siloxane (f) mit Polyetherolen lösemittelfrei erfolgt, so liegt eine weitere bevorzugte Ausführunsform der Erfindung vor.

Bei der zuvor genannten Umsetzung resultieren im Siloxanteil verzweigte, SiOC-verknüpfte Polyethersiloxane, die im Sinne dieser Erfindung eingesetzt werden können.

Das verzweigte SiOC-verknüpfte Polyethersiloxan (e) weist gleiche oder verschiedene Polyetherreste auf.

Wenn das im Siloxanteil verzweigte SiOC-verknüpfte Polyethersiloxan (e) gleiche oder verschiedene Polyetherreste umfasst, wobei die die Polyetherreste insbesondere folgender Formel (III) genügen:

$$-O-(CHR'CHR''O-)_m-(CH_2CH_2O-)_n-(CH(CH_3)CH_2O)_o-R''' \qquad (III)$$

mit

R' Wasserstoff, eine gesättigte Alkylgruppe mit 1-18 C-Atomen ist oder ein aromatischer Rest, respektive bevorzugt eine Methyl- oder Ethylgruppe oder ein Phenylrest,
R" Wasserstoff, eine gesättigte Alkylgruppe mit 1-18 C-Atomen ist oder ein aromatischer Rest, respektive bevorzugt eine Methyl- oder Ethylgruppe oder ein Phenylrest,
R'" gleiche oder verschiedene, gesättigte oder ungesättigte Alkylreste mit 1-18 C-Atomen, bevorzugt 1-12 C-Atome, besonders bevorzugt 1-4 C-Atome
m gleich 0 bis zu 250, bevorzugt 0 bis zu 100, besonders bevorzugt 0 bis zu 50 ist
n gleich 0 bis zu 250, bevorzugt 3 bis zu 100, besonders bevorzugt 5 bis zu 50 ist
o gleich 0 bis zu 250, bevorzugt 3 bis zu 100, besonders bevorzugt 5 bis zu 50 ist

mit der Maßgabe, dass die Summe aus m, n und o gleich oder größer als 3 ist,
so liegt eine bevorzugte Ausführungsform der Erfindung vor.

Ein weiterer Gegenstand der Erfindung ist eine Zusammensetzung zum Einsatz bei der Herstellung von PU-Schaumstoffen, insbesondere von PU-Weichschaum, HR-PU-Schaum, PU-Hypersoft-Schaum oder viskoelastischem PU-Schaum, dadurch gekennzeichnet, dass sie im Siloxanteil verzweigte SiOC-verknüpfte Polyethersiloxane, hergestellt aus verzweigten, Acetoxygruppen tragenden Siloxanen, umfasst, insbesondere nach den Maßgaben, wie zuvor bei der Herstellung im Siloxanteil verzweigter SiOC-verknüpfte Polyethersiloxane angegeben.

Die Siloxane können im Rahmen der vorliegenden Erfindung auch als Teil von Zusammensetzungen mit verschiedenen Trägermedien eingesetzt werden. Als Trägermedien kommen beispielweise Glykole, wie z.B. Monoethylenglycol (MEG), Diethylenglycol (DEG), Propylenglycol (PG) oder Dipropylenglycol (DPG), Alkoxylate oder Öle synthetischer und/oder natürlicher Herkunft in Frage.

Gemäß einer bevorzugten Ausführungsform der Erfindung umfasst die vorgenannte Zusammensetzung zum Einsatz bei der Herstellung von PU-Schaumstoffen Trägermedien, insbesondere wie zuvor genannt.

Bevorzugt wird zur Herstellung der PU-Schaumstoffe so viel Siloxan zugegeben, dass der Massenanteil an Gesamt-Siloxan bezogen auf den resultierenden Polyurethanschaum von 0,0001 bis 10 Gew.-%, vorzugsweise 0,01 bis 6 Gew.-%, insbesondere 0,1 bis 5 Gew.-% beträgt.

In einer bevorzugten Ausführungsform handelt es sich bei den erfindungsgemäßen bzw. erfindungsgemäß hergestellten PU-Schaumstoffen um offenzellige PU-Schaumstoffe, insbesondere PU-Weichschaumstoffe, besonders bevorzugt PU-Heißweichschaumstoffe. Offenzellig heißt im Rahmen der vorliegenden Erfindung, dass ein Schaum eine

gute Luftdurchlässigkeit (= Porosität) aufweist. Die Luftdurchlässigkeit des Schaums kann durch eine Staudruckmessung am Schaumstoff ermittelt werden. Die Staudruckmessung kann in Anlehnung an EN 29053 erfolgen. Wird der gemessene Staudruck in mm Wassersäule angegeben, so weisen offenzellige PU-Schäume, insbesondere PU-Weichschäume einen Staudruck von vorzugsweise kleiner 100 mm, bevorzugt ≤ 50 mm Wassersäule, bestimmt gemäß der in den Beispielen beschriebenen Messmethode, auf.

Die erfindungsgemäße Herstellung von PU-Schaumstoffen kann nach allen dem Fachmann geläufigen Verfahren erfolgen, z.B. im Handmischverfahren oder bevorzugt mit Hilfe von Hochdruck-oder Niederdruck-Verschäumungsmaschinen. Das erfindungsgemäße Verfahren kann kontinuierlich oder diskontinuierlich durchgeführt werden. Eine diskontinuierliche Durchführung des Verfahrens ist bevorzugt bei der Herstellung von Formschäumen, Kühlschränken, Schuhsohlen oder Paneelen. Eine kontinuierliche Verfahrensführung ist bei der Herstellung von Dämmplatten, Metallverbundelementen, Blöcken oder bei Sprühverfahren bevorzugt.

Eine besonders bevorzugte Zusammensetzung zur Herstellung von Polyurethan- bzw. Polyisocyanurat-Schaum im Sinne der vorliegenden Erfindung weist ein Raumgewicht (RG) von vorzugsweise 5 bis 800, insbesondere 5 bis 300, bevorzugt 5 bis 150, besonders bevorzugt von 10 bis 90 kg/m$^3$ auf und hat insbesondere die folgende Zusammensetzung:

| Komponente | Gewichtsanteil |
|---|---|
| Polyol | 100 |
| (Amin-)Katalysator | 0,05 bis 5 |
| Kalium-Trimerisierungskatalysator | 0 bis 10 |
| Siloxan (gesamt) | 0,01 bis 25, vorzugsweise 0,1 bis 20 |
| Wasser | 0 bis < 25, vorzugsweise 0,1 bis 15 |
| Treibmittel | 0 bis 130 |
| Flammschutzmittel | 0 bis 70 |
| Füllstoffe | 0 bis 150 |
| weitere Additive | 0 bis 20 |
| Isocyanat-Index: | größer 15 |

In einer bevorzugten Ausführungsform der Erfindung zeichnet sich das Verfahren dadurch aus, dass der PU-Schaumstoff ein PU-Hartschaum, ein PU-Weichschaum, ein viskoelastischer PU-Schaum, ein HR-PU-Schaum, ein PU-Hypersoft-Schaum, ein halbharter PU-Schaum, ein thermoverformbarer PU-Schaum oder ein PU-Integralschaum, bevorzugt ein PU-Weichschaum, HR-PU-Schaum, PU-Hypersoft-Schaum oder viskoelastischer PU-Schaum ist.

In einer bevorzugten Ausführungsform der Erfindung erfolgt die Umsetzung zur Herstellung der PU-Schaumstoffe unter Einsatz von

g) Wasser, und/oder
h) einem oder mehreren organischen Lösungsmitteln, und/oder
i) einem oder mehreren Stabilisatoren gegen oxidativen Abbau, insbesondere Antioxidantien,
und/oder
j) einem oder mehreren Flammschutzmitteln, und/oder
k) weiteren Schaumstabilisatoren, die ungleich Komponente (e) sind, auf der Basis von Siloxanen und/oder Polydialkylsiloxan-Polyoxyalkylen-Copolymeren,
und/oder
l) einem oder mehreren weiteren Zusatzstoffen, vorzugsweise ausgewählt aus der Gruppe der Tenside, Biozide, Farbstoffe, Pigmente, Füllstoffe, Antistatik-Additive, Vernetzer, Kettenverlängerer, Zellöffner, und/oder Duftstoffe.

Ein weiterer Gegenstand der Erfindung ist ein Polyurethanschaum, vorzugsweise PU-Hartschaum, PU-Weichschaum, viskoelastischer PU-Schaum, HR-PU-Schaum, PU-Hypersoft-Schaum, halbharter PU-Schaum, thermoverformbarer PU-Schaum oder PU-Integralschaum, bevorzugt PU-Weichschaum, HR-PU-Schaum oder viskoelastischer PU-Schaum, wobei er durch ein Verfahren, wie zuvor beschrieben, erhältlich ist.

Ein weiterer Gegenstand der Erfindung ist die Verwendung von PU-Schäumen, wie zuvor beschrieben, als Kühlschrankisolierung, Dämmplatte, Sandwichelement, Rohrisolation, Sprühschaum, 1- & 1,5-Komponenten-Dosenschaum, Holzimitat, Modellschaum, Blumensteckschaum, Verpackungsschaum, Matratze, Möbelpolster, Möbelformschaum, Kopfkissen, "Rebonded Foam", Schwammschaum, Automobil-Sitzpolster, Kopfstütze, Instrumententafel, Automobil-Innenverkleidung, Automobil-Dachhimmel, Schallabsorptionsmaterial, Lenkrad, Schuhsohle, Teppichrückseitenschaum, Filterschaum, Dichtschaum, Dichtmittel und Kleber oder zur Herstellung entsprechender Produkte.

Ein weiterer Gegenstand der Erfindung ist die Verwendung von im Siloxanteil verzweigten SiOC-verknüpften Polyethersiloxanen, hergestellt aus verzweigten, Acetoxygruppen tragenden Siloxanen, insbesondere wie zuvor beschrieben, zur Herstellung von PU-Schaumstoffen, bevorzugt PU-Weichschaum, HR-PU-Schaum, PU-Hypersoft-Schaum oder viskoelastischer PU-Schaum , die geruchsarm und/oder alterungsbeständig sind.

Ein weiterer Gegenstand der Erfindung ist die Verwendung von im Siloxanteil verzweigten SiOC-verknüpften Polyethersiloxanen, hergestellt aus verzweigten, Acetoxygruppen tragenden Siloxanen, insbesondere wie zuvor beschrieben, zur Herstellung von PU-Schaumstoffen, bevorzugt PU-Weichschaum, HR-PU-Schaum, PU-Hypersoft-Schaum oder viskoelastischer PU-Schaum , die emissionsarm bezüglich Aldehyd sind, vorzugsweise umfassend Formaldehyd-, Acetaldhyd-, Propionaldehyd-, Acrolein- und Benzaldehydemissionen, insbesondere Propionaldehydemissionen.

Dem Fachmann sind unterschiedliche analytische Methoden zur Bestimmung von Aldehyd Emissionen bekannt. Beispielhaft seien hier VDA 275, VDA 277 oder auch VDA 278 genannt, ebenso sei auf diverse Kammertestmethoden hingewiesen. VDA ist der Verband der Automobilindustrie (www.vda.de). "VDA 275" liefert ein Messverfahren zur Bestimmung der Formaldehydabgabe nach der modifizierten Flaschen-Methode.

Durch das erfindungsgemäße Verfahren können Polyurethanschäume hergestellt werden, die besonders arm an Aldehydemissionen sind. Die Erfindung ermöglicht somit auch ein Verfahren zur Herstellung von Polyurethanschäumen unter Erniedrigung der Aldehydgesamtemission der resultierenden Schäume, vorzugsweise umfassend Emissionen von Formaldehyd, Acetaldehyd, Propionaldehyd, Acrolein, sowie auch aromatischen Aldehyden, wie Benzaldehyd, vorteilhafterweise Aldehydemissionen umfassend Formaldehyd, Propionaldehyd, Acetaldehyd, Acrolein und Benzaldehyd, insbesondere Aldehydemissionen umfassend Formaldehyd, Propionaldehyd und Acetaldehyd aus Polyurethansystemen (insbesondere Polyurethanschaumstoffen).

Die nach dem erfindungsgemäßen Verfahren hergestellten PU-Schäume können in Anlehnung an die VDA 275 (VDA 275 "Formteile für den Fahrzeuginnenraum - Bestimmung der Formaldehydabgabe". Messverfahren nach der modifizierten Flaschen-Methode; Quelle: VDA 275, 07/1994, www.vda.de) auf ihren Formaldehyd-, Acetaldehyd- und Propionaldehydgehalt analysiert werden. Für die Bestimmung des Benzaldehydgehaltes kann insbesondere die VDA 278 in der Version von Oktober 2011 verwendet werden (Herausgeber/Editor: VERBAND DER AUTOMOBILINDUSTRIE E. V. (VDA); Behrenstr. 35; 10117 Berlin; www.vda.de).

Nachfolgend werden diesbezüglich die Messprinzipien erläutert:

**VDA 275**

Messprinzip

Bei der Methode werden Probekörper einer bestimmten Masse und Abmessung über destilliertem Wasser in einer geschlossenen 11-Glasflasche befestigt und bei konstanter Temperatur über eine definierte Zeit gelagert. Danach kühlt man die Flaschen ab und bestimmt im destillierten Wasser den absorbierten Formaldehyd. Die ermittelte Formaldehydmenge wird auf trockenes Formteilgewicht bezogen (mg/kg).

Analytik

Prüfkörper: Probenvorbereitung, Probenahme und Probekörperabmessungen

Nach dem Entformen der Schäume werden diese 24 Stunden bei 21 °C und ca. 50% relativer Luftfeuchte gelagert. Es werden dann Probekörper gleichmäßig verteilt über die Breite des (abgekühlten) Formteils an geeigneten und repräsentativen Stellen entnommen. Danach werden die Schäume in eine Aluminium-Folie eingeschlagen und in einem Polyethylenbeutel versiegelt.
Die Größe der Probekörper beträgt jeweils 100x40x40mm Dicke (ca. 9g). Pro Formteil werden 3 Probekörper für die Formaldehydbestimmung entnommen.

Durchführung der Prüfung: Aldehydabgabe

Direkt nach Erhalt der versiegelten Probekörper werden diese der Direktbestimmung zugeführt. Die Proben werden vor Beginn der Analyse auf der Analysenwaage auf 0,001g genau ausgewogen. In die verwendeten Glasflaschen werden jeweils 50 ml destilliertes Wasser pipettiert. Nach Anbringung der Probekörper in der Glasflasche wird das Gefäß geschlossen und über 3 Stunden im Wärmeschrank bei einer konstanten Temperatur von 60°C verwahrt. Nach Ablauf der Prüfzeit werden die Gefäße aus dem Wärmeschrank genommen. Nach 60 Minuten Standzeit bei Raumtemperatur werden die Probekörper aus der Prüfflasche entfernt. Anschließend erfolgt die Derivatisierung nach der DNPH-Methode (Dinitrophenylhydrazin). Dazu werden 900 µl der Wasserphase mit 100µl einer DNPH Lösung versetzt. Die DNPH-Lösung ist wie folgt hergestellt: 50mg DNPH in 40mL MeCN (Acetonitril) werden mit 250 µL HCl (1:10 verd.) angesäuert und auf 50 mL mit MeCN aufgefüllt. Nach der erfolgten Derivatisierung wird eine Probe mittels HPLC analysiert. Es erfolgt eine Auftrennung in die einzelnen Aldehyd-Homologen.

Geräteparameter HPLC

Es wird das folgende Gerät für die Analyse verwendet:

Agilent Technologies 1260
Chromatographiesäule: Phenomenex Luna 250*4,6mm C18, 5µ Teilchengröße
Laufmittel: Wasser Acetonitril Gradient
Detektion: UV 365 nm

**VDA 278**

Messprinzip

Die Werkstoffe werden hinsichtlich Art und Menge der aus ihnen ausgasbaren organischen Substanzen charakterisiert. Dazu werden zwei halbquantitative Summenwerte bestimmt, die eine Abschätzung der Emission von leichtflüchtigen organischen Verbindungen (VOC Wert), sowie den Anteil kondensierbarer Substanzen (Fog-Wert) ermöglichen. Ferner werden Einzelsubstanzen der Emission bestimmt. Bei der Analyse werden die Proben thermisch extrahiert, die Emissionen gaschromatografisch aufgetrennt und massenspektrometrisch detektiert. Die so erhaltenen Gesamtkonzentrationen für den VOC-Anteil werden in Toluol-Äquivalenten berechnet und ergeben als Ergebnis den VOC-Wert, der FOG-Anteil wird in Hexadecan-Äquivalenten dargestellt und ergibt den FOG-Wert.

Das Analysenverfahren dient zur Ermittlung von Emissionen aus nichtmetallischen Materialien, die für Formteile in Kraftfahrzeugen zum Einsatz kommen, dazu gehören auch Schaumstoffe.

Bei der Thermodesorptionsanalyse (TDS) werden geringe Materialmengen in einem Desorptionsrohr definiert aufgeheizt, die dabei emittierenden flüchtigen Substanzen mit Hilfe eines Inertgas-Stromes in einer Kühlfalle eines Temperatur-programmierbaren Verdampfers kryofokusiert. Nach Beendigung der Ausheizphase wird die Kühlfalle rasch auf 280°C erhitzt. Dabei verdampfen die fokussierten Substanzen. Sie werden anschließend in der gaschromatografischen Trennsäule aufgetrennt und massenspektrometrisch detektiert. Durch Kalibration mit Bezugssubstanzen ist eine halbquantitative Abschätzung der Emission, ausgedrückt in "µg/g", möglich. Als quantitative Bezugssubstanzen werden Toluol für die VOC-Analyse (VOC-Wert) und n-Hexadecan für den Fog-Wert verwendet. Anhand ihrer Massenspektren und Retentionsindizes können Signalpeaks Substanzen zugeordnet werden. Quelle: VDA 278/10.2011, www.vda.de

Die ermittelte Benzaldehydmenge wird auf Toluol-Äquivalente bezogen (µg/g).

Analytik

Prüfkörper: Probenvorbereitung, Probenahme und Probekörperabmessungen

Nach dem Entformen der Schäume werden diese 24 Stunden bei 21°C und ca. 50% relativer Luftfeuchte gelagert. Es werden dann Probekörper gleichmäßig verteilt über die Breite des (abgekühlten) Formteils an geeigneten und repräsentativen Stellen entnommen. Danach werden die Schäume in eine Aluminium-Folie eingeschlagen und in einem Polyethylenbeutel versiegelt.

Die Menge der Schaumproben, die in das Desorptionsröhrchen eingeführt wird, beträgt jeweils 10-15 mg.

Durchführung der Prüfung: VOC/FOG Thermodesorption

Direkt nach Erhalt der versiegelten Probekörper werden diese der Direktbestimmung zugeführt. Die Proben werden vor Beginn der Analyse auf der Analysenwaage auf 0,1mg genau ausgewogen und die entsprechende Schaummenge in dem Desorptionsröhrchen mittig plaziert. Ein Heliumstrom wird über die Probe geleitet und diese auf 90°C für 30 Minuten aufgeheizt. Alle flüchtigen Substanzen werden in einer Kühlfalle, die mit flüssigem Stickstoff gekühlt wurde, aufgefangen. Nach 30 Minuten wird die Kühlfalle auf 280°C aufgeheizt. Die verdampfenden Substanzen werden mittels der beschriebenen gaschromatographischen Säule voneinander getrennt und anschließend massenspektroskopisch analysiert.

Geräteparameter GC-MS

Es wird das folgende Gerät für die Analyse verwendet:

Fa. Gerstel
D-45473 Mühlheim an der Ruhr,
Eberhard-Gerstel-Platz 1 TDS-3 / KAS-4
Tenax®-Desorptionsröhrchen
Agilent Technologies 7890A (GC) / 5975C (MS)
Säule: HP Ultra2 (50m, 0,32mm, 0,52$\mu$m)
Trägergas: Helium

Verschäumergebnisse konnten zeigen, dass das erfindungsgemäße Verfahren die Bereitstellung von PU-Schäumen mit verminderten Aldehyd-Emissionen, wie vorzugsweise an Formaldehyd-, Acetaldehyd- und Propionaldehyd, insbesondere Propionaldehyd ermöglicht.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele**

Rohstoffe:

DT-Harz:

Das DT-Harz wurde wie folgt hergestellt und ohne weitere Aufarbeitung eingesetzt. In einem 500-ml-Vierhalsrundkolben mit KPG-Rührer und aufgesetztem Rückflusskühler wurden 52,2 g (0,293 mol) Methyltriethoxysilan zusammen mit 130,3 g (0,351 mol) Dekamethylcyclopentasiloxan in 200 ml Toluol unter Rühren auf 60°C erwärmt, mit 0,400 g Trifluormethansulfonsäure beaufschlagt und 4 Stunden lang äquilibriert. Dann wurden 15,8 g Wasser sowie 4,0 g Ethanol hinzugefügt und der Ansatz wurde für weitere 4 Stunden bei ca. 80°C auf Rückflusstemperatur erhitzt. Man tauschte den Rückflusskühler gegen eine Destillationsbrücke aus und destillierte innerhalb der folgenden Stunde die bis 100°C flüchtigen Bestandteile ab. Dann ersetzte man die Destillationsbrücke durch einen Rückflusskühler und fügte dem Ansatz 7,90 g Wassersowie 2,0 g Ethanol hinzu und ließ eine weitere Stunde sieden. Der Rückflusskühler wurde sodann nochmals durch eine Destillationsbrücke ersetzt und man trennte im Laufe der nächsten Stunde die bis 100°C flüchtigen Bestandteile ab. Der auf 60°C abgekühlte Ansatz wurde mit 4 m-% Natriumhydrogencarbonat versetzt, eine halbe Stunde gerührt, dann wurde das Salz mit Hilfe eines Faltenfilters von der Flüssigphase abgetrennt. Man destillierte bei 70°C und einem Druck von < 1mbar an einem Rotationsverdampfer die Flüchtigen ab und isoliert eine farblose, leichtbewegliche Flüssigkeit deren $^{29}$Si-NMR-Spektrum ein D-/T-Verhältnis von 5,85 : 1 zuwies.

Decamethylcyclopentasiloxan (CAS: 541-02-6), Methlytriethoxysilan (CAS: 2031-67-6), Essigsäureanhydrid (CAS: 108-24-7), Trifluormethansulfonsäure ($\geq$ 99 %, CAS: 1493-13-6) und Essigsäure ($\geq$ 99 %, CAS: 64-19-7) wurde bei Aldrich bezogen und ohne weitere Aufreinigung eingesetzt.

**Beispiel 1**

a) Herstellung von verzweigtem Acetoxysiloxan

Es wurden 107 g DT-Harz mit einem D/T-Verhältnis von 5,85 zu 1 mit 115,8 g Decamethyl¬cyclo-pentasiloxan in einem 500 mL-Dreihalskolben unter Schutzgas vorgelegt und mit Hilfe eines KPG-Rührers gerührt. Zu dieser Mischung wurden 31,1 g Essigsäureanhydrid, 3,8 g Essigsäure und 0,5 g Trifluormethansulfonsäure gegeben. Die Mischung wurde auf 150 °C erhitzt und sechs Stunden lang bei dieser Temperatur gerührt.

b) Herstellung eines im Siloxanteil verzweigten SiOC-verknüpften Polyethersiloxans

90,3 g eines Polyethers mit der allgemeinen Formel $CH_3CH_2CH_2CH_2O(CH_2CH_2O)_{32}(CH_2CH(CH_3)O)_{32}H$ wurden in einem 250 mL-Dreihalskolben vorgelegt und mit 100 g Toluol sowie 9,7 g des unter a) hergestelltem Acetoxyfunktionellen Siloxans versetzt. Die Mischung wurde mit Hilfe eines KPG-Rührers gerührt. Anschließend wurde so lange langsam $NH_3$-Gas eingeleitet, bis die Reaktionslösung einen pH-Wert von 7 bis 8 aufwies. Dabei fiel ein weißer Niederschlag. Die Mischung wurde auf 50 °C erhitzt, weitere 30 min gerührt und anschließend filtriert. Das klare Filtrat wurde

anschließend bei 130 °C und einem Druck von 1 mbar von flüchtigen Anteilen befreit.

**Beispiel 2**

a) Herstellung von verzweigtem Acetoxysiloxan

Es wurden 107 g DT-Harz mit einem D/T-Verhältnis von 5,85 zu 1 mit 115,8 g Decamethylcyclopentasiloxan in einem 500 mL-Dreihalskolben unter Schutzgas vorgelegt und mit Hilfe eines KPG-Rührers gerührt. Zu dieser Mischung wurden 31,1 g Essigsäureanhydrid, 3,8 g Essigsäure und 0,5 g Trifluormethansulfonsäure gegeben. Die Mischung wurde auf 150 °C erhitzt und sechs Stunden lang bei dieser Temperatur gerührt.

b) Herstellung eines im Siloxanteil verzweigten SiOC-verknüpften Polyethersiloxans

120,0 g eines Polyethers mit der allgemeinen Formel $CH_3CH_2CH_2CH_2O(CH_2CH_2O)_{32}(CH_2CH(CH_3)O)_{32}H$ wurden in einem 250 mL-Dreihalskolben vorgelegt und mit 12,9 g des unter a) hergestellten Acetoxy-funktionellen Siloxans versetzt. Die Mischung wurde mit Hilfe eines KPG-Rührers gerührt eine Stunde lang bei 25 °C gerührt. Anschließend wurden 2,6 g $Na_2CO_3$ zugesetzt und auf 60 °C erhitzt. Es wurde eine Stunde lang gerührt. Danach wurde die Mischung auf 130 °C erhitzt und die flüchtigen Bestandteile bei einem Druck von 1 mbar entfernt. Schließlich wurde das Reaktionsgemisch filtriert. Es wurden 128 g einer klaren leicht geblichen Flüssigkeit erhalten.

**Beispiel 3**

a) Herstellung von verzweigtem Acetoxysiloxan

Es wurden 325 g Decamethylcyclopentasiloxan und 63 g Methyltriethoxysiloxan in einem 1 L-Dreihalskolben vorgelegt. Die Mischung wurde mit Hilfe eines KPG-Rührers gerührt. Anschließend wurden 104 g Essigsäureanyhdrid, 7 g Essigsäure und 1 g Trifluormethansulfonsäure zugesetzt. Das Reaktionsgemisch wurde auf 150 °C erhitzt. Dabei wird über eine Destillationsbrücke anfallendes Destillat abgenommen. Es wurde fünf Stunden lang gerührt. Die Auswaage betrug 402 g.

b) Herstellung eines im Siloxanteil verzweigten SiOC-verknüpften Polyethersiloxans

80,0 g eines Polyethers mit der allgemeinen Formel $CH_3CH_2CH_2CH_2O(CH_2CH_2O)_{32}(CH_2CH(CH_3)O)_{32}H$ wurden in einem 250 mL-Dreihalskolben vorgelegt und mit 90 g Toluol sowie 8,6 g des unter a) hergestelltem Acetoxy-funktionellem Siloxans versetzt. Die Mischung wurde mit Hilfe eines KPG-Rührers gerührt. Anschließend wurde so lange langsam $NH_3$-Gas eingeleitet, bis die Reaktionslösung einen pH-Wert von 7 bis 8 aufwies. Dabei fiel ein weißer Niederschlag. Die Mischung wurde auf 50 °C erhitzt, weitere 30 min gerührt und anschließend filtriert. Das klare Filtrat wurde anschließend bei 130 °C und einem Druck von 1 mbar von flüchtigen Anteilen befreit.

**Beispiel 4**

a) Herstellung von verzweigtem Acetoxysiloxan

Es wurden 325 g Decamethylcyclopentasiloxan und 63 g Methyltriethoxysiloxan in einem 1 L-Dreihalskolben vorgelegt. Die Mischung wurde mit Hilfe eines KPG-Rührers gerührt. Anschließend wurden 104 g Essigsäureanyhdrid, 7 g Essigsäure und 1 g Trifluormethansulfonsäure zugesetzt. Das Reaktionsgemisch wurde auf 150 °C erhitzt. Dabei wird über eine Destillationsbrücke anfallendes Destillat abgenommen. Es wurde fünf Stunden lang gerührt. Die Auswaage betrug 402 g.

b) Herstellung eines im Siloxanteil verzweigten SiOC-verknüpften Polyethersiloxans

110,5 g eines Polyethers der allgemeinen Formel $CH_3CH_2CH_2CH_2O(CH_2CH_2O)_{32}(CH_2CH(CH_3)O)_{32}H$ wurden ein einem 250 mL-Dreihalskolben vorgelegt und mit 11,9g des unter a) hergestelltem Acetoxy-funktionellem Siloxans versetzt. Die Mischung wurde mi Hilfe eines KPG-Rührers gerührt eine Stunde lang bei 25 °C gerührt. Anschließend wurden 2,4 g $Na_2CO_3$ zugesetzt und auf 60 °C erhitzt. Es wurde eine Stunde lang gerührt. Danach wurde die Mischung auf 130 °C erhitzt und die flüchtigen Bestandteile bei einem Druck von 1 mbar entfernt. Schließlich wurde das Reaktionsgemisch filtriert. Es wurde eine klare leicht gebliche Flüssigkeit erhalten.

**Beispiel 5 (nicht erfindungsgemäß)**

a) Herstellung Chlorsiloxan

Die Herstellung des verzweigten Chlorsiloxans erfolgte in an sich bekannter Weise, wobei 854 g Decamethylcyclopentasiloxan mit 140 g Methyltrichlorsilan in einem 2L-Dreihalskolben gemischt wurden. Anschließend wurde 1 g Trifluormethansulfonsäure zugesetzt. Die Mischung wurde auf 80 °C erhitzt und drei Stunden lang gerührt. Danach wurde die Mischung auf 30 °C abgekühlt und mit 6 g Wasser versetzt. Danach wurde auf 80 °C erwärmt und weitere 3 h bei einem Drück von 150 mbar gerührt. Die chemische Charakterisierung erfolgte durch Bestimmung des Säurewertes. Die Maßeinheit wird angegeben in Säureäquivalenten pro kg Chlorsiloxan. Der Säurewert betrug 2,19 mol/kg.

b) Herstellung Polyethersiloxan

455 g eines Polyethers der allgemeinen Formel $CH_3CH_2CH_2CH_2O(CH_2CH_2O)_{32}(CH_2CH(CH_3)O)_{32}H$ wurden vorgelegt und auf 50 °C aufgeheizt. Anschließend wurden 50 g des unter a) hergestellte Chlorsiloxan zugegeben und 30 Minuten gerührt. Es wird langsam Ammoniak bis zu einem pH-Wert von 9 eingeleitet. Es fällt ein weißer Niederschlag (Ammoniumchlorid) aus. Danach werden die flüchtigen Bestandteile im Vakuum entfernt und mit 1 m-% Diisopropanolamin stabilisiert.

**Beispiel 6**

a) Herstellung eines im Siloxanteil verzweigten SiOC-verknüpften Polyethersiloxans

88,0 g eines Polyethers mit der allgemeinen Formel $CH_3CH_2CH_2CH_2O(CH_2CH_2O)_{32}(CH_2CH(CH_3)O)_{32}H$ wurden in einem 250 mL-Dreihalskolben vorgelegt und mit 100 g Ethylacetat sowie 9,5 g des unter Beispiel 3 a) hergestelltem Acetoxy-funktionellem Siloxans versetzt. Die Mischung wurde mit Hilfe eines KPG-Rührers gerührt. Anschließend wurde so lange langsam $NH_3$-Gas eingeleitet, bis die Reaktionslösung einen pH-Wert von 7 bis 8 aufwies. Dabei fiel ein weißer Niederschlag. Die Mischung wurde auf 50 °C erhitzt, weitere 30 min gerührt und anschließend filtriert. Das klare Filtrat wurde anschließend bei 130 °C und einem Druck von 1 mbar von flüchtigen Anteilen befreit.

Herstellung der Polyurethanschäume

Bei den anwendungstechnischen Tests wurden typische Formulierungen für Polyurethanschäume, die sich wie folgt zusammensetzen, verwendet.

Tabelle 1: Formulierung I für TDI80-Weichblockschaum-Anwendungen (20 kg/$m^3$)

| Formulierung I | Massenanteile (pphp) |
|---|---|
| Arcol® 1107[1)] | 100 |
| Desmodur® T 80[2)] Index <115> | 64,2 |
| Wasser | 5 |
| Methylenchlorid | 5 |
| TEGOAMIN® 33[3)] | 0,15 |
| KOSMOS® 29[4)] | 0,25 |
| Schaumstabilisator[5)] | 2,0 |

1) Erhältlich bei der Firma Covestro, hierbei handelt es sich um ein Glycerin-basiertes Polyetherpolyol mit einer OH-Zahl von 48 mg KOH/g.
2) Toluylendiisocyanat T 80 (80 % 2,4-Isomer, 20 % 2,6-Isomer) der Firma Covestro, 3 mPa·s, 48 % NCO, Funktionalität 2.
3) Amin-Katalysator der Firma Evonik Industries AG.
4) Zinnkatalysator, erhältlich bei der Firma Evonik Industries AG: Zinn(II)-Salz der 2-Ethylhexansäure.
5) Als Schaumstabilisator werden die in den Beispielen 1 bis 4 und 6 beschriebenen, erfindungsgemäßen und das in Beispiel 5 beschriebene, nicht erfindungsgemäße Polyethermodifizierte Polysiloxan, verwendet.

Tabelle 2: Formulierung II für TDI80-Weichblockschaum-Anwendungen (25 kg/$m^3$)

| Formulierung II | Massenanteile (pphp) |
|---|---|
| Arcol® 1107[1)] | 100 |
| Desmodur® T 80[2)] Index <105> | 48,3 |
| Wasser | 4 |
| TEGOAMIN® DMEA[3)] | 0,15 |
| KOSMOS® 29[4)] | 0,22 |
| Schaumstabilisator[5)] | 2,0 |

1) Erhältlich bei der Firma Covestro, hierbei handelt es sich um ein Glycerin-basiertes Polyetherpolyol mit einer OH-Zahl von 48 mg KOH/g.
2) Toluylendiisocyanat T 80 (80 % 2,4-Isomer, 20 % 2,6-Isomer) der Firma Covestro, 3 mPa·s, 48 % NCO, Funktionalität 2.
3) Amin-Katalysator der Firma Evonik Industries AG.
4) Zinnkatalysator, erhältlich bei der Firma Evonik Industries AG: Zinn(II)-Salz der 2-Ethylhexansäure.
5) Als Schaumstabilisator werden die in den Beispielen 1 bis 4 und 6 beschriebenen, erfindungsgemäßen und das in Beispiel 5 beschriebene, nicht erfindungsgemäße Polyethermodifizierte Polysiloxan, verwendet.

Tabelle 3: Formulierung III für TDI80-Weichblockschaum-Anwendungen (24 kg/$m^3$)

| Formulierung III | Massenanteile (pphp) |
|---|---|
| Arcol® 1107[1)] | 25 |
| Rokopol® M1170[6)] | 75 |
| Desmodur® T 80[2)] Index <90> | 44,4 |
| Wasser | 4,5 |
| TEGOAMIN® DMEA[3)] | 0,05 |
| TEGOAMIN® 33[3)] | 0,12 |
| KOSMOS® 29[4)] | 0,08 |
| Schaumstabilisator[5)] | 2,0 |

1) Erhältlich bei der Firma Covestro, hierbei handelt es sich um ein Glycerin-basiertes Polyetherpolyol mit einer OH-Zahl von 48 mg KOH/g.
2) Toluylendiisocyanat T 80 (80 % 2,4-Isomer, 20 % 2,6-Isomer) der Firma Covestro, 3 mPa·s, 48 % NCO, Funktionalität 2.
3) Amin-Katalysator der Firma Evonik Industries AG.
4) Zinnkatalysator, erhältlich bei der Firma Evonik Industries AG: Zinn(II)-Salz der 2-Ethylhexansäure.
5) Als Schaumstabilisator werden die in den Beispielen 1 bis 4 und 6 beschriebenen, erfindungsgemäßen und das in Beispiel 5 beschriebene, nicht erfindungsgemäße polyethermodifizierte Polysiloxan, verwendet.
6) Erhältlich bei der Firma PCC Rokita SA, hierbei handelt es sich um ein Glycerin-basiertes Polyetherpolyol mit einer OH-Zahl von 34 mg KOH/g.

Tabelle 5: Formulierung IV für viskoelastische TDI80-Weichblockschaum-Anwendungen (52 kg/$m^3$)

| Formulierung IV | Massenanteile (pphp) |
|---|---|
| Rokopol® vTec8020[7)] | 92 |
| Rokopol® M1170[6)] | 8 |
| Desmodur® T 80[2)] Index <93> | 41,8 |

(fortgesetzt)

| Formulierung IV | Massenanteile (pphp) |
|---|---|
| Wasser | 1,3 |
| TEGOAMIN® BDE[3)] | 0,15 |
| TEGOAMIN® 33[3)] | 0,30 |
| KOSMOS® 29[4)] | 0,03 |
| ORTEGOL® 204[8)] | 1,6 |
| ORTEGOL® VCO[9)] | 0,7 |
| Schaumstabilisator[5)] | 0,7 |

2) Toluylendiisocyanat T 80 (80 % 2,4-Isomer, 20 % 2,6-Isomer) der Firma Covestro, 3 mPa·s, 48 % NCO, Funktionalität 2.
3) Amin-Katalysator der Firma Evonik Industries AG.
4) Zinnkatalysator, erhältlich bei der Firma Evonik Industries AG: Zinn(II)-Salz der 2-Ethylhexansäure.
5) Als Schaumstabilisator werden die in den Beispielen 1 bis 4 und 6 beschriebenen, erfindungsgemäßen und das in Beispiel 5 beschriebene, nicht erfindungsgemäße Polyethermodifizierte Polysiloxan, verwendet.
6) Erhältlich bei der Firma PCC Rokita SA, hierbei handelt es sich um ein Glycerin-basiertes Polyetherpolyol mit einer OH-Zahl von 34 mg KOH/g.
7) Erhältlich bei der Firma PCC Rokita SA, hierbei handelt es sich um ein Polyetherpolyol mit einer OH-Zahl von 185 mg KOH/g.
8) Vernetzer der Firma Evonik Industries AG.
9) Zellöffner der Firma Evonik Industries AG.

Tabelle 6: Formulierung V für viskoelastische MDI-Weichblockschaum-Anwendungen (45 kg/m$^3$)

| Formulierung V | Massenanteile (pphp) |
|---|---|
| Desmophen 24WB03[10)] | 70 |
| Desmophen 41 WB01 [11)] | 30 |
| VORANATE™ MDI 229[12)] Index <81 > | 60,5 |
| Wasser | 2,5 |
| TEGOAMIN® BDE[3)] | 0,20 |
| TEGOAMIN® 33[3)] | 0,25 |
| KOSMOS® 29[4)] | 0,10 |
| Benzylalkohol | 5 |
| Schaumstabilisator[5)] | 0,8 |

2) Toluylendiisocyanat T 80 (80 % 2,4-Isomer, 20 % 2,6-Isomer) der Firma Covestro, 3 mPa·s, 48 % NCO, Funktionalität 2.
3) Amin-Katalysator der Firma Evonik Industries AG.
4) Zinnkatalysator, erhältlich bei der Firma Evonik Industries AG: Zinn(II)-Salz der 2-Ethylhexansäure.
5) Als Schaumstabilisator werden die in den Beispielen 1 bis 4 und 6 beschriebenen, erfindungsgemäßen und das in Beispiel 5 beschriebene, nicht erfindungsgemäße Polyethermodifizierte Polysiloxan, verwendet.
10) Erhältlich bei der Firma Covestro, hierbei handelt es sich um ein Polyetherpolyol mit einer OH-Zahl von 165 mg KOH/g.
11) Erhältlich bei der Firma Covestro, hierbei handelt es sich um ein Glycerin-basiertes Polyetherpolyol mit einer OH-Zahl von 37 mg KOH/g.
12) polymeres MDI der Firma DOW Chemical, 190 mPa·s, 31,1 % NCO, Funktionalität 2,7

Allgemeine Durchführung zur Herstellung der Schäume

Die Polyurethanschäume wurden als sogenannte Handschäume im Labor hergestellt. Die Herstellung der Schäume erfolgte nach folgenden Angaben bei 22 °C und 762 mm Hg Luftdruck. Zur Herstellung der Polyurethanschäume nach Formulierung I und III wurden jeweils 300 g Polyol, zur Herstellung der Polyurethanschäume nach Formulierung II wurden jeweils 400 g Polyol eingesetzt. Zur Herstellung der Polyurethanschäume nach Formulierung IV und V wurden jeweils 250 g Polyol eingesetzt. Die anderen Formulierungsbestandteile wurden entsprechend umgerechnet. Dabei bedeutete beispielsweise 1,0 Teil (1,0 pphp) einer Komponente 1 g dieser Substanz je 100 g Polyol.

Für die Schaumstoffe nach Formulierung I, II und III wurden in einem Pappbecher der Zinnkatalysator Zinn(II)-2-ethylhexanoat, Polyol, das Wasser, die Aminkatalysatoren und der jeweilige Schaumstabilisator vorgelegt und für 60 s mit einem Scheibenrührer bei 1000 U/min vermischt. Sofern in der Formulierung verwendet, wurde Methylenchlorid nach 45 s zugegeben. Nach dem ersten Rühren wurde das Isocyanat zugegeben und mit dem gleichen Rührer für 7 s bei 2500 U/min eingearbeitet. Dabei begann die Mischung im Becher aufzuschäumen. Deshalb wurde sie direkt nach dem Ende des Rührens in eine mit Papier ausgekleidete Verschäumungsbox gegossen. Diese hat eine Grundfläche von 30 x 30 cm und eine Höhe von 30 cm.

Für die Schaumstoffe nach Formulierung IV und V wurden in einem Pappbecher der Zinnkatalysator Zinn(II)-2-ethylhexanoat, Polyol, das Wasser, die Aminkatalysatoren, falls vorhanden weitere Additive und der jeweilige Schaumstabilisator vorgelegt und für 60 s mit einem Scheibenrührer bei 1000 U/min vermischt. Nach dem ersten Rühren wurde das Isocyanat zugegeben und mit dem gleichen Rührer für 7 s bei 1500 U/min eingearbeitet. Dabei begann die Mischung im Becher aufzuschäumen. Deshalb wurde sie direkt nach dem Ende des Rührens in eine Verschäumungsbox gegossen. Diese hat eine Grundfläche von 17 x 17 cm und eine Höhe von 30 cm. Nach außen verhinderte eine 5 cm dicke Isolierung aus PUR-Schaum ein zu schnelles Abkühlen. Innen war die Box mit einer Kunststofffolie ausgelegt, um den ausgehärteten Schaum anschließend entnehmen zu können.

Der Schaum stieg nach dem Eingießen in der Verschäumungsbox auf. Im Idealfall blies der Schaum bei Erreichen der maximalen Steighöhe ab und sackte dann leicht zurück. Dabei öffneten sich die Zellmembranen der Schaumbläschen und eine offenporige Zellstruktur des Schaumstoffs wurde erhalten.

Anwendungstechnische Tests

Die hergestellten Schäume wurden anhand folgender physikalischer Eigenschaften bewertet:

a) Rücksacken des Schaumstoffes nach dem Ende der Steigphase (=Rückfall).
Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein positiver Wert beschreibt hierbei das Rücksacken des Schaumes nach dem Abblasen, ein negativer Wert beschreibt entsprechend das Nachsteigen des Schaumes.

b) Schaumhöhe ist die Höhe des gebildeten, frei gestiegenen Schaums nach 3 Minuten. Die Schaumhöhe wird in Zentimeter (cm) angegeben.

c) Steigzeit
Die Zeitspanne zwischen dem Ende des Mischens der Reaktionskomponenten und dem Abblasen des Polyurethanschaums.

d) Raumgewicht
Die Bestimmung erfolgt, wie in DIN EN ISO 845:2009-10 beschrieben, durch Messung der Rohdichte. Das Raumgewicht wird in kg/m3 angegeben.

e) Porosität
Die Luftdurchlässigkeit des Schaums wurde in Anlehnung an DIN EN ISO 4638:1993-07 durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen. Die Messung des Staudrucks erfolgte mittels einer Apparatur umfassend eine Stickstoffquelle, Reduzierventil mit Manometer, Durchflussregelschraube, Waschflasche, Durchflussmessgerät, T-Stück, Auflagedüse und einem skaliertem Glasrohr, in welches Wasser gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.
Die Messung erfolgt durch Einstellung des Stickstoffvordrucks per Reduzierventil auf 1 bar und Einregeln der Durchflussmenge auf 480 l/h (Formulierung I - III) bzw. 100 l/h (Formulierung IV und V). Die Wassermenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers

kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat. Die Auswertung erfolgt durch Mittelwertbildung über die fünf erhaltenen Messwerte.

f) Zahl der Zellen pro cm (Zellzahl): Diese wird auf einer Schnittfläche optisch bestimmt (gemessen gemäß DIN EN 15702).

g) Stauchhärte CLD 40 % nach DIN EN ISO 3386-1:1997 + A1:2010. Die Angabe der Messwerte erfolgt in Kilopascal (kPa).

h) Zugfestigkeit und Bruchdehnung nach DIN EN ISO 1798:2008. Die Angabe der Messwerte der Zugfestigkeit erfolgt in Kilopascal (kPa), die der Bruchdehnung in Prozent (%).

i) Rückprallelastizität nach DIN EN ISO 8307:2007. Die Angabe der Messwerte der erfolgt in Prozent (%).

Druckverformungsrest

Aus den fertigen Schäumen wurden jeweils fünf Probenkörper der Größe 5 cm x 5 cm x 2,5 cm ausgeschnitten. Die Ausgangsdicke wurde gemessen. Die Messung des Druckverformungsrestes erfolgte frühestens 72 h nach Herstellung nach DIN EN ISO 1856:2018. Die Prüfung erfolge nach Verfahren C, wobei die Druckverformung im Unterschied zu Verfahren A bei 80 °C bestimmt wurde. Alle weiteren Bedingungen waren wie unter Verfahren A beschrieben: Die Probenkörper wurden zwischen die Platten der Verformungseinrichtung gelegt und wurden um 90% ihrer Dicke (d.h. auf 2,5 mm) komprimiert. Innerhalb von 15 Minuten wurden die Probenkörper in einen Ofen bei 80 °C gelegt und dort für 22 h belassen. Nach dieser Zeit wurde die Vorrichtung aus dem Ofen genommen, die Probenkörper innerhalb von 1 min aus der Vorrichtung entfernt und auf einer Holzoberfläche abgelegt. Nach 30 min Entspannung wurde die Dicke erneut gemessen und der Druckverformungsrest berechnet:

$$DVR=(d_0-d_r)/d_0 \times 100$$

Geruchliche Überprüfung der erhaltenen Schäume

Die fertigen Schäume, dargestellt nach Formulierung I -Vwurden in geruchsneutrale Kunststofftüten gepackt und luftdicht aufbewahrt. Für die Geruchsbewertung des Schaums wurden Würfel der Größe 10 cm x 10 cm x 10 cm ausgeschnitten und in Gläser mit einem Volumen von 1 L überführt, aus denen die Proben abgerochen wurden. Die Gläser wurden mit einem Schraubdeckel verschlossen. Die geruchliche Überprüfung erfolgte nach 24 stündiger Lagerung der Gläser bei 22°C.

Die geruchliche Überprüfung wurde von einem trainierten Panel mit einer Anzahl von 13 Personen bewertet. Hierbei wurde die Intensität des Geruchs abgefragt, wenig Geruch wurde mit +, mittelstarker Geruch mit ++ und starker Geruch wurde mit +++ bewertet.

Ergebnisse der Verschäumungen

Die erfindungsgemäßen Schaumstabilisatoren der Beispiele 1 bis 4 und 6 sowie der in Beispiel 5 beschriebene, nicht erfindungsgemäße Schaumstabilisator wurden in den Formulierungen I - V ausgeprüft. Die Ergebnisse der anwendungstechnischen Tests für die verschiedenen Formulierungen und verwendeten Schaumstabilisatoren sind in den Tabellen 6 bis 12 wiedergegeben.

Tabelle 6: Verschäumungsergebnisse und geruchliche Überprüfung der Schäume bei Verwendung verschiedener Schaumstabilisatoren nach Formulierung I

| Nr. | Stabilisator | Steigzeit [s] | Steighöhe [cm] | Rückfall [cm] | Zellzahl [$cm^{-1}$] | Dichte [$kg/m^3$] | Zugfestigkeit [kPa] | Ballrebound [%] | Stauchhärte (CLD 40%) [kPa] | Porosität [mm] | Intensität des Geruchs (13 olfaktorisch geschulte Personen) | | |
|---|---|---|---|---|---|---|---|---|---|---|---|---|---|
| | | | | | | | | | | | +++ | ++ | + |
| 1 | Bsp. 1 a) | 82 | 29,9 | 1,2 | 14 | 20,5 | 79,8 | 39 | 4,3 | 7 | 0 | 7 | 6 |
| 2 | Bsp.2a) | 85 | 29,7 | 1,1 | 14 | 20,1 | 79,9 | 35 | 4,7 | 16 | 0 | 0 | 13 |
| 3 | Bsp. 3a) | 83 | 30,1 | 0,9 | 14 | 19,8 | 77,5 | 37 | 4,2 | 12 | 1 | 6 | 6 |
| 4 | Bsp.4a) | 82 | 29,9 | 1,1 | 14 | 20,2 | 74,6 | 38 | 4,3 | 9 | 0 | 2 | 11 |
| 5 | Bsp. 5 b) | 81 | 30,2 | 1,0 | 14 | 20,1 | 75,2 | 37 | 4,0 | 8 | 8 | 5 | 0 |
| 6 | Bsp. 6a) | 82 | 30,3 | 1,2 | 14 | 20,4 | 78,7 | 36 | 4,6 | 11 | 1 | 5 | 7 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Tabelle 7: Verschäumungsergebnisse und geruchliche Überprüfung der Schäume bei Verwendung verschiedener Schaumstabilisatoren nach Formulierung II

| Nr. | Stabilisator | Steigzeit [s] | Steighöhe [cm] | Rückfall [cm] | Zellzahl [$cm^{-1}$] | Dichte [$kg/m^3$] | Zugfestigkeit [kPa] | Ballrebound [%] | Stauchhärte (CLD 40%) [kPa] | Porosität [mm] | Intensität des Geruchs (13 olfaktorisch geschulte Personen) | | |
|---|---|---|---|---|---|---|---|---|---|---|---|---|---|
| | | | | | | | | | | | +++ | ++ | + |
| 7 | Bsp. 1[a)] | 96 | 31,1 | 0,6 | 14 | 25,5 | 90,2 | 39 | 4,0 | 15 | 1 | 8 | 4 |
| 8 | Bsp. 2[a)] | 100 | 30,8 | 0,5 | 14 | 25,2 | 88,6 | 40 | 3,9 | 18 | 0 | 2 | 11 |
| 9 | Bsp. 3[a)] | 101 | 30,5 | 0,4 | 14 | 24,9 | 89,4 | 42 | 4,3 | 22 | 1 | 7 | 5 |
| 10 | Bsp.4[a)] | 98 | 31,2 | 0,3 | 14 | 24,8 | 92,5 | 39 | 4,2 | 17 | 0 | 3 | 10 |
| 11 | Bsp. 5 [b)] | 100 | 30,7 | 0,6 | 14 | 25,8 | 90,5 | 40 | 4,0 | 20 | 11 | 2 | 0 |
| 12 | Bsp. 6[a)] | 102 | 30,6 | 0,4 | 14 | 25,1 | 88,7 | 38 | 4,3 | 16 | 2 | 5 | 6 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Tabelle 8: Verschäumungsergebnisse und geruchliche Überprüfung der Schäume bei Verwendung verschiedener Schaumstabilisatoren nach Formulierung III

| Nr. | Stabilisator | Steigzeit [s] | Steighöhe [cm] | Rückfall [cm] | Zellzahl [$cm^{-1}$] | Dichte [$kg/m^3$] | Zugfestigkeit [kPa] | Ballrebound [%] | Stauchhärte (CLD 40%) [kPa] | Porosität [mm] | Intensität des Geruchs (13 olfaktorisch geschulte Personen) | | |
|---|---|---|---|---|---|---|---|---|---|---|---|---|---|
| | | | | | | | | | | | +++ | ++ | + |
| 13 | Bsp. 1[a)] | 149 | 19,8 | 0,2 | 14 | 23,1 | 120,3 | 45 | 1,5 | 3 | 3 | 9 | 1 |
| 14 | Bsp.2[a)] | 131 | 19,1 | 0,4 | 14 | 24,0 | 122,5 | 42 | 1,7 | 5 | 0 | 4 | 9 |
| 15 | Bsp. 3[a)] | 144 | 19,7 | 0,2 | 14 | 24,3 | 110,8 | 43 | 1,6 | 7 | 2 | 7 | 4 |
| 16 | Bsp.4[a)] | 139 | 19,7 | 0,3 | 14 | 23,6 | 115,4 | 47 | 1,6 | 5 | 0 | 5 | 8 |
| 17 | Bsp. 5 [b)] | 142 | 19,4 | 0,2 | 14 | 24,1 | 118,3 | 43 | 1,7 | 5 | 12 | 1 | 0 |
| 18 | Bsp. 6[a)] | 145 | 18,9 | 0,1 | 14 | 23,1 | 111,3 | 42 | 1,4 | 6 | 1 | 6 | 6 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Tabelle 9: Verschäumungsergebnisse und geruchliche Überprüfung der Schäume bei Verwendung verschiedener Schaumstabilisatoren nach Formulierung IV

| Nr. | Stabilisator | Steigzeit [s] | Steighöhe [cm] | Rückfall [cm] | Zellzahl [$cm^{-1}$] | Dichte [$kg/m^3$] | Zugfestigkeit [kPa] | Ballrebound [%] | Stauchhärte (CLD 40%) [kPa] | Porosität [mm] | Intensität des Geruchs (13 olfaktorisch geschulte Personen) | | |
|---|---|---|---|---|---|---|---|---|---|---|---|---|---|
| | | | | | | | | | | | +++ | ++ | + |
| 19 | Bsp. 1[a)] | 118 | 33,5 | 0,5 | 11 | 52,5 | 67,4 | 3 | 1,9 | 80 | 0 | 6 | 7 |
| 20 | Bsp. 2[a)] | 117 | 33,4 | 0,7 | 10 | 52,0 | 70,3 | 4 | 2,2 | 68 | 0 | 1 | 12 |
| 21 | Bsp. 3[a)] | 113 | 35,0 | 0,8 | 11 | 52,3 | 60,4 | 3 | 2,4 | 77 | 1 | 5 | 7 |
| 22 | Bsp. 4 [a)] | 114 | 34,9 | 0,4 | 11 | 53,0 | 68,2 | 5 | 2,0 | 90 | 0 | 2 | 11 |
| 23 | Bsp. 5 [b)] | 117 | 35,2 | 0,6 | 10 | 52,9 | 65,1 | 5 | 2,1 | 70 | 7 | 6 | 0 |
| 24 | Bsp. 6[a)] | 113 | 33,5 | 0,4 | 11 | 53,1 | 68,7 | 4 | 2,2 | 92 | 1 | 4 | 8 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Tabelle 10: Verschäumungsergebnisse und geruchliche Überprüfung der Schäume bei Verwendung verschiedener Schaumstabilisatoren nach Formulierung V

| Nr. | Stabilisator | Steigzeit [s] | Steighöhe [cm] | Rückfall [cm] | Zellzahl [$cm^{-1}$] | Dichte [$kg/m^3$] | Zugfestigkeit [kPa] | Ballrebound [%] | Stauchhärte (CLD 40%) [kPa] | Porosität [mm] | Intensität des Geruchs (13 olfaktorisch geschulte Personen) | | |
|---|---|---|---|---|---|---|---|---|---|---|---|---|---|
| | | | | | | | | | | | +++ | ++ | + |
| 25 | Bsp. 1[a)] | 160 | 35,6 | 3,0 | 12 | 45,5 | 96,6 | 5 | 2,9 | 5 | 1 | 9 | 3 |
| 26 | Bsp.2[a)] | 162 | 36,7 | 3,2 | 13 | 45,7 | 115,3 | 4 | 2,7 | 5 | 0 | 3 | 10 |
| 27 | Bsp. 3[a)] | 165 | 36,3 | 3,1 | 12 | 45,4 | 95,3 | 5 | 3,1 | 9 | 1 | 6 | 6 |
| 28 | Bsp. 4[a)] | 168 | 35,5 | 2,9 | 12 | 44,8 | 110,2 | 7 | 2,9 | 8 | 0 | 3 | 10 |
| 29 | Bsp. 5 [b)] | 162 | 37,0 | 3,3 | 13 | 45,8 | 103,4 | 6 | 3,0 | 5 | 10 | 3 | 0 |
| 30 | Bsp. 6[a)] | 170 | 35,6 | 3,0 | 13 | 44,5 | 98,6 | 5 | 2,9 | 8 | 0 | 7 | 6 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Wie die Tabellen 6 bis 10 zeigen, konnten die nach Beispiel 1 bis 4 und 6 erhaltenen Schaumstabilisatoren zur Herstellung verschiedener typischer Formulierungen (I- V) für Weichblockschaum verwendet werden. Dabei sind die Offenzelligkeit und Zellzahl der Weichschäume sowie die physikalischen Messwerte wie zum Beispiel Zugfestigkeit, Härte, Dichte und Ballrebound nicht beeinflusst im Vergleich zum nicht erfindungsgemäßen Schaumstabilisator nach Beispiel 5. Wie die Tabellen 6 bis 10 ebenfalls zeigen, ist jedoch die Intensität des Geruchs der Schäume, die mit den Stabilisatoren aus den Beispielen 1-4 und 6 dargestellt wurden, durchweg geringer als der Geruch der Schäume, die mit dem nicht erfindungsgemäßen Schaumstabilisator aus Beispiel 5 hergestellt wurden. Dabei stuft eine deutliche Mehrzahl der Probanden die erfindungsgemäßen Proben als geruchsneutral (Schaumstabilisatoren nach Beispiel 2 und 4) bzw. deutlich geruchsärmer (Beispiel 1 und 3) ein. Die geruchliche Überprüfung wurde von den Probanden noch zweimal wiederholt, wobei die vorgenannten Ergebnisse in genau der gleichen Weise bestätigt wurden. Aus den Ergebnissen ist ersichtlich, dass die Probanden die Schäume, die mit einem erfindungsgemäßen Schaumstabilisator hergestellt wurden, als weniger intensiv riechend beurteilt haben.

Tabelle 11: Alterung der Schäume am Beispiel der Bestimmung des Druckverformungsrestes bei Verwendung verschiedener Schaumstabilisatoren nach Formulierung I

| Nr. | Stabilisator | Druckverformungsrest |
|---|---|---|
| | | 90%, 22 h bei 80 °C |
| 31 | Bsp. 1[a)] | 27 |
| 32 | Bsp. 2[a)] | 32 |
| 33 | Bsp. 3[a)] | 23 |
| 34 | Bsp. 4[a)] | 35 |
| 35 | Bsp. 5 [b)] | 55 |
| 36 | Bsp. 6[a)] | 18 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Tabelle 12: Alterung der Schäume am Beispiel der Bestimmung des Druckverformungsrestes bei Verwendung verschiedener Schaumstabilisatoren nach Formulierung II

| Nr. | Stabilisator | Druckverformungsrest |
|---|---|---|
| | | 90%, 22 h bei 80 °C |
| 37 | Bsp. 1[a)] | 25 |
| 38 | Bsp. 2[a)] | 44 |
| 39 | Bsp. 3[a)] | 31 |
| 40 | Bsp.4[a)] | 38 |
| 41 | Bsp. 5 [b)] | 58 |
| 42 | Bsp. 6[a)] | 26 |

a) Erfindungsgemäße Schaumstabilisatoren, dargestellt nach den Beispielen 1-4 und 6
b) Nicht erfindungsgemäße Schaumstabilisatoren, darstellt nach Beispiel 5

Wie die Tabellen 11 und 12 zeigen, weisen die mit den erfindungsgemäßen Schaumstabilisatoren hergestellten Weichschäume bessere Alterungseigenschaften auf, als die mit dem nicht erfindungsgemäßen Schaumstabilisator aus Beispiel 5 hergestellten Weichschäume. Die Alterung wurde hier am Beispiel des Druckverformungsrestes nach Stauchung auf 90% der Ausgangshöhe und Lagerung im Ofen bei 80 °C für 22 h untersucht. Ein geringerer Druckverformungsrest bedeutet, dass die Probenkörper nach Entspannung für 30 min näher an die Ausgangshöhe von ca. 2,5 cm heran kamen, was mit einer besseren Alterungsbeständigkeit gleichzusetzen ist. Insbesondere die aus den nach Beispiel 1, 3 und 6 erhaltenen Schaumstabilisatoren führen zu deutlich alterungsbeständigeren Weichschäumen.

Darüber hinaus wurde gefunden, dass der Einsatz der erfindungsgemäßen Schaumstabilisatoren auch in den anderen o.g. Formulierungen zu deutlich alterungsbeständigeren Schäumen führte. Diese wiesen ebenfalls deutlich

geringere Druckverformungsreste auf.

## Patentansprüche

1. Verfahren zur Herstellung von PU-Schaumstoffen durch Umsetzung

   (a) mindestens einer Polyolkomponente mit
   (b) mindestens einer Isocyanatkomponente
   in Gegenwart von
   (c) einem oder mehreren Katalysatoren, die die Reaktionen Isocyanat-Polyol und/oder Isocyanat-Wasser und/oder die Isocyanat-Trimerisierung katalysieren, sowie
   (d) optional von ein oder mehreren chemischen oder physikalischen Treibmitteln,
   unter Einsatz von
   (e) im Siloxanteil verzweigten SiOC-verknüpften Polyethersiloxanen, hergestellt aus (f) verzweigten, Acetoxygruppen tragenden Siloxanen,

   wobei so viel von dem im Siloxanteil verzweigten SiOC-verknüpften Polyethersiloxan (e) zugegeben wird, dass der Massenanteil dieses Polyethersiloxans (e) bezogen auf den fertigen PU-Schaumstoff von 0,0001 bis 10 Gew.-%, vorzugsweise 0,01 bis 6 Gew.-%, insbesondere 0,1 bis 5 Gew.-% beträgt.

2. Verfahren gemäß Anspruch 1, **dadurch gekennzeichnet, dass** der PU-Schaumstoff ein PU-Hartschaum, ein PU-Weichschaum, ein viskoelastischer PU-Schaum, ein HR-PU-Schaum, ein PU-Hypersoft-Schaum, ein halbharter PU-Schaum, ein thermoverformbarer PU-Schaum oder ein PU-Integralschaum, bevorzugt ein PU-Weichschaum, HR-PU-Schaum, PU-Hypersoft-Schaum oder viskoelastischer PU-Schaum ist.

3. Verfahren gemäß Anspruch 1 oder 2, **dadurch gekennzeichnet, dass** die Umsetzung erfolgt unter Einsatz von

   g) Wasser, und/oder
   h) einem oder mehreren organischen Lösungsmitteln, und/oder
   i) einem oder mehreren Stabilisatoren gegen oxidativen Abbau, insbesondere Antioxidantien, und/oder
   j) einem oder mehreren Flammschutzmitteln, und/oder
   k) weiteren Schaumstabilisatoren, die ungleich Komponente (e) sind, auf der Basis von Siloxanen und/oder Polydialkylsiloxan-Polyoxyalkylen-Copolymeren,
   und/oder
   l) einem oder mehreren weiteren Zusatzstoffen, vorzugsweise ausgewählt aus der Gruppe der Tenside, Biozide, Farbstoffe, Pigmente, Füllstoffe, Antistatik-Additive, Vernetzer, Kettenverlängerer, Zellöffner, und/oder Duftstoffe.

4. Verfahren nach einem der Ansprüche 1 bis 3, **dadurch gekennzeichnet, dass** die verzweigten, Acetoxygruppen tragenden Siloxane (f) erhältlich sind aus der Umsetzung von

   iv) Alkoxygruppen tragenden Silanen und/oder Siloxanen, und/oder
   v) Hydroxygruppen tragenden Silanen und/oder Siloxanen, und/oder
   vi) einfachen Siloxanzyklen und / oder DT-Zyklen,

   mit Acetanhydrid, Supersäure, insbesondere Trifluormethansulfonsaure, sowie Essigsäure.

5. Verfahren nach einem der Ansprüche 1 bis 4, **dadurch gekennzeichnet, dass** zur Herstellung der verzweigten, Acetoxygruppen tragenden Siloxane (f) ein Alkoxygruppen tragendes, mindestens eine T-und/ oder Q-Gruppe enthaltendes Silan und/oder Siloxan und/oder DT-Zyklen eingesetzt werden.

6. Verfahren nach einem der Ansprüche 1 bis 5, **dadurch gekennzeichnet, dass** die Herstellung der im Siloxanteil verzweigten SiOC-verknüpften Polyethersiloxane (e) durch Umsetzung der verzweigten, Acetoxygruppen tragenden Siloxane (f) mit Polyetherolen erfolgt.

7. Verfahren nach Anspruch 6, **dadurch gekennzeichnet, dass** die dort genannte Umsetzung der verzweigten, Acetoxygruppen tragenden Siloxane (f) mit Polyetherolen unter Verwendung eines inerten Lösungsmittels, bevorzugt

unter Verwendung eines inerten und zugleich mit entstehender und gegebenenfalls bereits vorhandener Essigsäure Azeotrop bildenden Lösungsmittels erfolgt, wobei das inerte Lösungsmittel vorteilhafterweise ein aromatisches, bevorzugt alkylaromatisches Lösungsmittel und ganz besonders bevorzugt Toluol ist.

**8.** Verfahren nach Anspruch 6, **dadurch gekennzeichnet, dass** die dort genannte Umsetzung der verzweigten, Acetoxygruppen tragenden Siloxane (f) mit Polyetherolen lösemittelfrei erfolgt.

**9.** Verfahren nach einem der Ansprüche 6 bis 8, **dadurch gekennzeichnet, dass** die Umsetzung der verzweigten, Acetoxygruppen tragenden Siloxane (f) mit Polyetherolen in Gegenwart mindestens einer Base, insbesondere in Gegenwart von Natriumhydrogencarbonat, Ammoniak oder eines organischen Amins erfolgt.

**10.** Verfahren nach einem der Ansprüche 1 bis 9, **dadurch gekennzeichnet, dass** das im Siloxanteil verzweigte SiOC-verknüpfte Polyethersiloxan (e) gleiche oder verschiedene Polyetherreste enthält, wobei die Polyetherreste insbesondere folgender Formel (III) genügen:

$$-O-(CHR'CHR''O-)_m-(CH_2CH_2O-)_n-(CH(CH_3)CH_2O)_o-R''' \qquad (III)$$

mit

R' Wasserstoff, eine gesättigte Alkylgruppe mit 1-18 C-Atomen ist oder ein aromatischer Rest, respektive bevorzugt eine Methyl- oder Ethylgruppe oder ein Phenylrest,
R" Wasserstoff, eine gesättigte Alkylgruppe mit 1-18 C-Atomen ist oder ein aromatischer Rest, respektive bevorzugt eine Methyl- oder Ethylgruppe oder ein Phenylrest,
R'" gleiche oder verschiedene, gesättigte oder ungesättigte Alkylreste mit 1-18 C-Atomen, bevorzugt 1-12 C-Atome, besonders bevorzugt 1-4 C-Atome
m gleich 0 bis zu 250, bevorzugt 0 bis zu 100, besonders bevorzugt 0 bis zu 50 ist
n gleich 0 bis zu 250, bevorzugt 3 bis zu 100, besonders bevorzugt 5 bis zu 50 ist
o gleich 0 bis zu 250, bevorzugt 3 bis zu 100, besonders bevorzugt 5 bis zu 50 ist

mit der Maßgabe, dass die Summe aus m, n und o gleich oder größer als 3 ist,
entspricht.

**11.** Zusammensetzung zum Einsatz bei der Herstellung von PU-Schaumstoffen, insbesondere von PU-Weichschaum, HR-PU-Schaum, PU-Hypersoft-Schaum oder viskoelastischem PU-Schaum, **dadurch gekennzeichnet, dass** sie im Siloxanteil verzweigte SiOC-verknüpfte Polyethersiloxane, hergestellt aus verzweigten, Acetoxygruppen tragenden Siloxanen, umfasst, insbesondere nach den Maßgaben, wie in den Ansprüchen 4 bis 10 zur Herstellung im Siloxanteil verzweigter SiOC-verknüpfte Polyethersiloxane angegeben,
sowie vorzugsweise umfassend Trägermedien, insbesondere Glykole, wie z.B. Monoethylenglycol (MEG), Diethylenglycol (DEG), Propylenglycol (PG) oder Dipropylenglycol (DPG), Alkoxylate oder Öle synthetischer und/oder natürlicher Herkunft.

**12.** Polyurethanschaum, vorzugsweise PU-Hartschaum, PU-Weichschaum, viskoelastischer PU-Schaum, HR-PU-Schaum, PU-Hypersoft-Schaum, halbharter PU-Schaum, thermoverformbarer PU-Schaum oder PU-Integralschaum, bevorzugt PU-Weichschaum, HR-PU-Schaum oder viskoelastischer PU-Schaum, **dadurch gekennzeichnet, dass** er durch ein Verfahren gemäß einem der Ansprüche 1 bis 10 erhältlich ist.

**13.** Verwendung von PU-Schäumen gemäß Anspruch 12 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber, Beschichtung oder zur Herstellung entsprechender Produkte.

**14.** Verwendung von im Siloxanteil verzweigten SiOC-verknüpften Polyethersiloxanen, hergestellt aus verzweigten, Acetoxygruppen tragenden Siloxanen, insbesondere wie in einem der vorigen Ansprüche angegeben, zur Herstellung von PU-Schaumstoffen, bevorzugt PU-Weichschaum, HR-PU-Schaum, PU-Hypersoft-Schaum oder viskoelastischer PU-Schaum, die geruchsarm und/oder alterungsbeständig sind.

**15.** Verwendung von im Siloxanteil verzweigten SiOC-verknüpften Polyethersiloxanen, hergestellt aus verzweigten,

Acetoxygruppen tragenden Siloxanen, insbesondere wie in einem der vorigen Ansprüche angegeben, zur Herstellung von PU-Schaumstoffen, bevorzugt PU-Weichschaum, HR-PU-Schaum, PU-Hypersoft-Schaum oder viskoelastischer PU-Schaum , die emissionsarm bezüglich Aldehyd sind, vorzugsweise umfassend Formaldehyd-, Acetaldhyd-, Propionaldehyd-, Acrolein- und Benzaldehydemissionen, insbesondere Propionaldehydemissionen.

Europäisches Patentamt
European Patent Office
Office européen des brevets

# EUROPÄISCHER RECHERCHENBERICHT

Nummer der Anmeldung
EP 20 17 4097

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 15 45 110 A1 (UNION CARBIDE CORP) 26. Juni 1969 (1969-06-26)<br>* Seite 2, Absatz 1 - Seite 4, Absatz 1 *<br>* Beispiele 8-13, 15 *<br>----- | 1-15 | INV.<br>C08G18/00<br><br>ADD.<br>C08J9/00 |
| X | EP 0 003 285 A1 (BAYER AG [DE]) 8. August 1979 (1979-08-08)<br>* Seite 1, Zeilen 1-18 *<br>* Beispiele 1-4 *<br>----- | 1-15 | |
| A | EP 3 219 738 A1 (EVONIK DEGUSSA GMBH [DE]) 20. September 2017 (2017-09-20)<br>* Absätze [0001], [0023] - [0025], [0030], [0069] - [0070], [0092] - [0095] *<br>* Absätze [0135] - [0140]; Beispiele 1-6; Tabellen 1-4 *<br>* Absätze [0143] - [0145], [0148] - [0150], [0152] - [0154]; Beispiele 4-10; Tabellen 7-9 *<br>----- | 1-15 | |

RECHERCHIERTE SACHGEBIETE (IPC)
C08J
C08G

Der vorliegende Recherchenbericht wurde für alle Patentansprüche erstellt

1

| Recherchenort | Abschlußdatum der Recherche | Prüfer |
|---|---|---|
| Den Haag | 16. Oktober 2020 | Mayer, Anne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 17 4097

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2020

| Im Recherchenbericht angeführtes Patentdokument | Datum der Veröffentlichung | Mitglied(er) der Patentfamilie | Datum der Veröffentlichung |
|---|---|---|---|
| DE 1545110 A1 | 26-06-1969 | BE 651372 A | 04-02-1965 |
| | | DE 1545110 A1 | 26-06-1969 |
| | | GB 1070244 A | 01-06-1967 |
| | | NL 6408970 A | 08-02-1965 |
| | | US 3356758 A | 05-12-1967 |
| EP 0003285 A1 | 08-08-1979 | CA 1128541 A | 27-07-1982 |
| | | DE 2802668 A1 | 26-07-1979 |
| | | EP 0003285 A1 | 08-08-1979 |
| | | JP S5727131 B2 | 09-06-1982 |
| | | JP S54110299 A | 29-08-1979 |
| | | US 4177201 A | 04-12-1979 |
| EP 3219738 A1 | 20-09-2017 | DK 3219738 T3 | 27-07-2020 |
| | | EP 3219738 A1 | 20-09-2017 |
| | | PL 3219738 T3 | 05-10-2020 |
| | | PT 3219738 T | 29-05-2020 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2042534 A1
- EP 1712578 A
- EP 1161474 A
- WO 0058383 A
- US 20070072951 A
- EP 1678232 A
- WO 2005085310 A
- US 3900424 A
- US 3953383 A
- WO 2010028362 A
- WO 2009130470 A
- WO 2013022932 A
- WO 2011163133 A
- US 4500704 A
- WO 2008058913 A
- WO 2005033167 A
- US 20060293400 A
- WO 2006094227 A
- WO 2004096882 A
- US 20020103091 A
- WO 2006116456 A
- WO 2004020497 A
- US 20060229375 A
- WO 2009058367 A
- WO 0158976 A1
- WO 2005063841 A1
- WO 0222702 A1
- WO 2006055396 A1
- WO 03029320 A1
- US 6924321 B2
- US 6762274 B2
- EP 2104696 B1
- WO 2004060956 A1
- WO 2013102053 A1
- US 20070072951 A1
- WO 2007111828 A
- US 20070238800 A
- US 6359022 B
- WO 9612759 A
- EP 0380993 A
- US 3346557 A
- EP 0839852 A
- EP 1544235 A
- DE 102004001408
- WO 2005118668 A
- DE 2533074
- EP 1537159 A
- EP 533202 A
- US 3933695 A
- EP 0780414 A
- DE 4239054
- DE 4229402
- EP 867465 A
- US 4147847 A
- EP 0493836 A
- US 4855379 A
- EP 1520870 A
- EP 18172882
- EP 18172876
- EP 17195510
- EP 17204277
- EP 18189073
- EP 18210035


### In der Beschreibung aufgeführte Nicht-Patentliteratur


- Polyurethane. Kunststoffhandbuch. Carl-Hanser-Verlag, 1966, vol. 7
- KUNSTSTOFFHANDBUCH. 1983
- KUNSTSTOFFHANDBUCH. 1993
- **J. POLA et al.** *Collect. Czech. Chem. Commun.*, 1974, vol. 39 (5), 1169-1176
- O-Metal Derivates of Organic Hydroxy Compounds. **W. SIMMLER.** Houben-Weyl, Methods of Organic Chemistry. vol. VI/2, 162 ff
- *CHEMICAL ABSTRACTS,* 541-02-6
- *CHEMICAL ABSTRACTS,* 2031-67-6
- *CHEMICAL ABSTRACTS,* 108-24-7
- *CHEMICAL ABSTRACTS,* 1493-13-6
- *CHEMICAL ABSTRACTS,* 64-19-7